# EUROPÄISCHE PATENTSCHRIFT

(11) **EP 2 862 773 B1**
(45) Veröffentlichungstag und Bekanntmachung des Hinweises auf die Patenterteilung: **08.11.2023**
(21) Anmeldenummer: 14003340.8
(22) Anmeldetag: 27.09.2014
(51) Int. Cl.: B60W 50/12, B60W 30/095, B60W 40/09, G05D 1/00, B60W 30/00, B60W 50/00, B60W 30/09

(54) **Kraftfahrzeug und Verfahren zur Steuerung eines Kraftahrzeugs**
Motor vehicle and method for controlling a motor vehicle
Véhicule automobile et procédé de commande d'un véhicule automobile

(30) Priorität: 02.10.2013 DE 102013016488
(43) Veröffentlichungstag der Anmeldung: 22.04.2015
(73) Patentinhaber: AUDI AG, 85045 Ingolstadt (DE)
(72) Erfinder: Danzl, Martin, DE - 83115 Neubeuern (DE); Wüst, Sabine, DE - 85051 Ingolstadt (DE); Gollewski, Torsten, DE - 85080 Gaimersheim (DE); Kienzl, Georg, DE - 85055 Ingolstadt (DE); Hagemann, Franz-Michael, 85120 Hepberg (DE); Siedersberger, Karl-Heinz, 86669 Königsmoos (DE); Miehling, Thomas, DE - 85057 Ingolstadt (DE); Kunsch, Peter, DE - 85123 Karlskron (DE)
(74) Vertreter: Reichert, Thomas Klaus

(56) Entgegenhaltungen:
- DE-A1- 10 334 203
- DE-A1-102008 040 077
- DE-A1-102009 020 649

## Beschreibung

Die Erfindung betrifft ein Kraftfahrzeug, umfassend wenigstens ein Fahrerassistenzsystem zur Vorausberechnung von Voraussagedaten über wenigstens eine zukünftige Fahrsituation des Kraftfahrzeugs durch Auswertung von das Kraftfahrzeug betreffenden Egodaten und das Kraftfahrzeugumfeld betreffenden Umfelddaten, wobei das Kraftfahrzeug in einem ersten Betriebsmodus des Fahrerassistenzsystems durch einen Fahrer steuerbar ist, wobei das Fahrerassistenzsystem dazu ausgebildet ist, bei Erfüllung einer Auslösebedingung oder wenigstens einer Auslösebedingung von mehreren Auslösebedingungen temporär in einen zweiten Betriebsmodus umzuschalten, in dem die Steuerung des Kraftfahrzeugs ohne Eingriffsmöglichkeit durch den Fahrer autonom durch das Fahrerassistenzsystem erfolgt, wobei die Auslösebedingung dazu ausgebildet ist, zumindest die Voraussagedaten auszuwerten, wobei die Voraussagedaten Trajektoriedaten umfassen, die mehrere von der momentanen Position des Kraftfahrzeugs ausgehende fahrbare Trajektorien beschreiben, wobei das Fahrerassistenzsystem zur Berechnung der Trajektoriendaten unter wenigstens einer aus Egodaten und/oder Umfelddaten bestimmten Randbedingung ausgebildet ist und die Auslösebedingung zur Auswertung der Trajektoriendaten ausgebildet ist.

Moderne Kraftfahrzeuge weisen eine Vielzahl von Fahrerassistenzsystemen auf, die der Steigerung der Fahrsicherheit und/oder des Fahrkomforts dienen. Insbesondere sind Fahrerassistenzsysteme bekannt, die abhängig von einem Ist-Zustand des Kraftfahrzeugs in die Steuerung der Kraftfahrzeugsysteme eingreifen, wie beispielsweise Antiblockiersysteme oder Spurstabilisierungssysteme. Daneben sind Komfortsysteme wie Spurhalteassistenzsysteme oder automatische Abstandsregelungen bekannt, die aus Egodaten und Umfelddaten eines Kraftfahrzeugs Voraussagen über künftige Fahrsituationen berechnen und das Kraftfahrzeug entsprechend dieser Voraussagen steuern. Es ist bekannt, dass diese teilautonomen Steuersysteme Steueraufgaben häufig mit einer geringeren Reaktionszeit und einer höheren Genauigkeit durchführen als ein menschlicher Fahrer. Damit kann ein autonomer Fahrbetrieb in vielen Fahrsituationen zu einem verbesserten Fahrverhalten des Fahrzeugs gegenüber einer Steuerung durch einen menschlichen Fahrer führen.

Um die Vorteile der schnelleren und genaueren Steuerung des Kraftfahrzeugs bei einem autonomen Fahrbetrieb zur Verbesserung der Sicherheit zu nutzen, ist es bekannt, Systeme einzusetzen, die drohende Kollisionen mit weiteren Kraftfahrzeugen erkennen und versuchen, diese Kollisionen zu vermeiden beziehungsweise die Auswirkungen der Kollisionen zu verringern. Hierzu wird in den Fahrbetrieb eingegriffen, um das Kraftfahrzeug kontrolliert zum Stillstand zu bringen. Nachteilig ist hierbei, dass die erreichte Position des Kraftfahrzeugs häufig nicht ideal ist, wobei das zum Stillstand gebrachte Kraftfahrzeug ein Hindernis für weitere Verkehrsteilnehmer darstellt. Zudem ist es wünschenswert, autonome Fahreingriffe auch in anderen Fahrsituationen zu nutzen, um ein insgesamt verbessertes Fahrverhalten des Kraftfahrzeugs in kritischen Situationen zu erreichen, ohne die Handlungsfreiheit des Fahrers unnötig einzuschränken. Wesentlich ist somit bei der Entwicklung solcher Fahrerassistenzsysteme, den Eingreifzeitpunkt des Fahrerassistenzsystems so zu bestimmen, dass ein Eingreifen des Fahrerassistenzsystems für den Fahrer nachvollziehbar und gewünscht ist, was für ein relativ spätes Eingreifen des Fahrerassistenzsystems spricht, ohne dabei die Leistungsfähigkeit des Fahrerassistenzsystems einzuschränken.

Die Druckschrift DE 10 2008 040 077 A1 offenbart ein Fahrassistenzverfahren, bei dem autonom kollisionsvermeidende beziehungsweise Kollisionsfolgen mindernde Fahrmanöver durchgeführt werden können. Es ist hierbei möglich, dass Eingriffe in den Triebstrang, das Bremssystem und/oder das Lenksystem durch einen Fahrer übersteuerbar oder nicht übersteuerbar sind. Es können mehrere Ausweichetrajektorien ermittelt werden. Autonome Fahreingriffe werden dann ausgeführt, wenn das Fahrerassistenzsystem eine sichere Ausweichtrajektorie kennt.

Die Druckschrift DE 103 34203 A1 betrifft ein interaktives Verkehrsabwicklungsverfahren, bei welchem die Standort- und Bewegungsdaten verschiedener Verkehrsteilnehmer zum Zweck der Unfallverhinderung miteinander koordiniert werden. Hierbei können beispielsweise ein Fahrstil, ein Alter, eine Fahrtüchtigkeit und eine Aufmerksamkeit des Fahrers berücksichtigt werden.

Die Druckschrift DE 10 2009 020 649 A1 betrifft ein Verfahren und eine Vorrichtung zur Kollisionsvermeidung durch ein Ausweichen vor einem Hindernis.

Der Erfindung liegt daher die Aufgabe zugrunde, ein Kraftfahrzeug anzugeben, dessen Verhalten in kritischen Fahrsituationen verbessert ist.

Zur Lösung dieser Aufgabe ist bei einem Kraftfahrzeug der eingangs genannten Art erfindungsgemäß vorgesehen, dass die Auslösebedingung zur Auswertung von wenigstens eine Fahrereigenschaft beschreibenden Fahrereigenschaftsdaten ausgebildet ist, wobei das Fahrerassistenzsystem zur Bestimmung eines Grenzwerts für einen Fahrzeugparameter aus den Trajektoriendaten und den Fahrereigenschaftsdaten ausgebildet ist und die Auslösebedingung oder eine der Auslösebedingungen das Über- oder Unterschreiten des Grenzwerts ist.

Der Erfindung liegt die Idee zugrunde, einem Fahrer im "normalen" Fahrbetrieb die größtmögliche Handlungsfreiheit zu lassen, jedoch kritische Situationen im Fahrbetrieb prädiktiv zu erkennen und bei Vorliegen einer solchen Fahrsituation rechtzeitig in den Fahrbetrieb einzugreifen. Dabei wurde erkannt, dass verschiedene Fahrer Situationen unterschiedlich als kritisch einstufen. So wird ein eher ruhiger, auf Komfort bedachter Fahrer ein frühes Eingreifen eines Fahrerassistenzsystems schätzen, wenn dies zu einem insgesamt komfortableren Fahrerlebnis führt. Ein derartiges relativ frühes Eingreifen eines Fahrerassistenzsystems würde jedoch von einem eher sportlichen Fahrer als störend empfunden, da viele von sportlichen Fahrern gewünschte Fahrmanöver in diesem Fall durch ein Eingreifen eines Fahrerassistenzsystems unterbunden oder gestört würden. Dies würde zu einer Ablehnung eines solchen Fahrerassistenzsystems bei sportlichen Fahrern führen, was dazu führen könnte, dass solche Fahrer das Fahrerassistenzsystem nicht nutzen.

Auch andere Fahrereigenschaften können einen Einfluss auf einen optimalen Eingriffszeitpunkt eines Fahrerassistenzsystems in den Fahrbetrieb haben. So wird beispielsweise ein ausgeruhter und aufmerksamer Fahrer eine Vielzahl von Fahrsituationen, die bei einem unaufmerksamen Fahrer einen Eingriff eines Fahrerassistenzsystems notwendig machen würden, problemlos durchfahren. Würde ein Fahrerassistenzsystem bereits in Situationen, die problemlos durch einen Fahrer fahrbar sind, in den Fahrbetrieb eingreifen, wäre dies wiederum eine unnötige Einschränkung der Handlungsfreiheit des Fahrers, die zu einer verringerten Akzeptanz des Fahrerassistenzsystems führen kann.

Ein prädiktiver Eingriff in den Fahrbetrieb erfolgt insbesondere mit dem Ziel, den Fahrbetrieb möglichst auch nach der kritischen Situation nahtlos fortsetzen zu können. Kommt es zu einem solchen Eingriff, so erfolgt zumindest die Steuerung des Kraftfahrzeugs vollständig autonom, ohne Eingriffsmöglichkeiten durch den Fahrer. Insbesondere kann im zweiten Betriebsmodus auch eine vollständig autonome Längs- und Querführung des Kraftfahrzeugs erfolgen. Das erfindungsgemäße Kraftfahrzeug kann vorteilhaft ein Drive-by-Wire-System oder ein Steer-by-Wire-System aufweisen, bei dem die den Fahrbetrieb des Kraftfahrzeugs bestimmenden Bedienelemente des Kraftfahrzeugs, insbesondere das Lenkrad des Kraftfahrzeugs, mechanisch von den zu steuernden Komponenten, insbesondere der Lenkung, entkoppelt sind. Damit ist eine vollständig vom Fahrer unabhängige Steuerung des Kraftfahrzeugs möglich, ohne Bedienelemente des Kraftfahrzeugs bewegen zu müssen. Dadurch können die Vorteile einer autonomen Steuerung des Kraftfahrzeugs, insbesondere eine kürzere Reaktionszeit, eine exaktere Steuerung und die Möglichkeit, Komponenten, für die keine Bedienelemente vorgesehen sind, wie Einzelradbremsen, in die Steuerung einzubeziehen, genutzt werden. Durch ein präventives Eingreifen und die zumindest teilweise autonome Steuerung des Kraftfahrzeugs ist es möglich, kritische Fahrsituationen sicher zu durchfahren, wobei in der Regel keine Bremsung des Kraftfahrzeugs bis zum Stillstand notwendig ist, sondern der Fahrbetrieb bis zu einem vorausliegenden Wegpunkt, an dem die kritische Fahrsituation überwunden ist, fortgesetzt wird. Insbesondere kann das Fahrassistenzsystem die Führung des Kraftfahrzeugs wieder an einen Fahrer rückübergeben, wenn bestimmte Rückübergabebedingungen, insbesondere das Nichtvorliegen einer Auslösebedingung, erfüllt sind.

Beim erfindungsgemäßen Kraftfahrzeug wird vorausschauend in den Fahrbetrieb des Kraftfahrzeugs eingegriffen. Dies bedeutet, dass zukünftige Fahrsituationen des Kraftfahrzeugs ermittelt werden und eine Auslösebedingung von Voraussagedaten über diese zukünftige Fahrsituationen abhängt. Diese Abhängigkeit wird durch eine Abhängigkeit der Auslösebedingung von Fahrereigenschaftsdaten, die eine Fahrereigenschaft beschreiben, ergänzt. Die Fahrereigenschaftsdaten können insbesondere einen individuellen Grenzbereich des Fahrers beschreiben. Der individuelle Grenzbereich des Fahrers beschreibt einen Bereich, in welchem sich der Fahrer sicher mit dem Kraftfahrzeug bewegen kann. Für einen perfekten Fahrer würde dieser individuelle Grenzbereich dem physikalischen Grenzbereich entsprechen. Der physikalische Grenzbereich gibt an, ab wann die Kontrolle über das Kraftfahrzeug verloren gehen kann, das bedeutet, er gibt an, was das Kraftfahrzeug in einer aktuellen Situation tatsächlich zu leisten in der Lage ist. Der physikalische Grenzbereich ist eine Variable, also eine situationsabhängige Größe und hängt im Wesentlichen von der technischen Ausstattung und dem Zustand des Kraftfahrzeugs, der Straßenbeschaffenheit, dem Straßenverlauf und der Witterung ab. Der individuelle Grenzbereich ist bei realen Fahrern weit enger, da selbst professionelle Rennfahrer zum einen keine perfekte Kenntnis von den einzelnen Parametern haben, von denen der physikalische Grenzbereich abhängig ist, zum anderen nicht perfekt fahren. Der individuelle Grenzbereich eines Fahrers wird typischerweise erheblich vom fahrerischen Können des Fahrers und seiner Aufmerksamkeit bestimmt.

Daneben können die Fahrereigenschaftsdaten auch parametrisieren, welchen Fahrstil ein Fahrer bevorzugt. Greift ein Fahrerassistenzsystem relativ spät in das Fahrgeschehen ein, so ist es möglich, dass zum Durchfahren einer zukünftigen Fahrsituation relativ große Beschleunigungen und/oder abrupte Fahrmanöver notwendig sind. Während ein komfortorientierter Fahrer dies vermeiden möchte und daher einen frühen Eingriff des Fahrerassistenzsystems wünscht, ist es möglich, dass sich ein eher sportlicher Fahrer durch ein frühes Eingriffen bevormundet fühlt. Die Fahrereigenschaftsdaten können also sowohl die tatsächlichen Möglichkeiten eines Fahrers beschreiben, bestimmte zukünftige Fahrsituationen zu durchfahren als auch die Vorlieben eines Fahrers. Die Auslösebedingung kann also so ausgebildet sein, dass in dem Fall, wenn die Voraussagedaten eine Durchfahrbarkeit zukünftiger Fahrsituationen innerhalb des physikalischen Grenzbereichs beschreiben, das Umschalten in den zweiten Betriebsmodus ergänzend von den Fahreigenschaftsdaten abhängig ist, wobei die Fahrereigenschaftsdaten insbesondere beschreiben können, wie weit zukünftige Fahrsituationen von einem physikalischen Grenzbereich entfernt sein müssen, um nicht zu einem Wechsel in den zweiten Betriebsmodus zu führen. Das Fahrassistenzsystem des erfindungsgemäßen Kraftfahrzeugs greift also insbesondere in Situationen in den Fahrbetrieb ein, in denen ein Fahrer das Kraftfahrzeug nicht mehr zuverlässig und komfortabel beherrschen kann.

Der zweite Betriebsmodus des Fahrassistenzsystems wird also insbesondere dann aktiviert, wenn das Kraftfahrzeug im fahrerindividuellen Grenzbereich bewegt wird oder wenn plötzlich unerwartete Verkehrssituationen auftreten. Um solche Situationen zu erkennen, sammelt das Fahrerassistenzsystem Egodaten und Umfelddaten, die durch verschiedene Einrichtungen des Kraftfahrzeugs zur Verfügung gestellt werden können. Die Egodaten können Informationen über Kraftfahrzeugkomponenten, insbesondere den Motor, die Bremsen und/oder die Reifen umfassen. So kann das Fahrverhalten des Kraftfahrzeugs besonders gut vorausgesagt werden, indem ein Reibungskoeffizient zwischen Reifen und Fahrbahn abgeschätzt wird. Hierzu können direkt Reibungskoeffizienten ermittelt oder vorgegeben werden, die Reibungskoeffizienten können aber auch aus weiteren Informationen der Reifen, wie beispielsweise die Fahrleistung, den Typ und/oder den Luftdruck des Reifens ermittelt werden. Bezüglich des Motors und der Bremsen sind insbesondere maximale Brems- und Beschleunigungsmomente wesentlich zur Ermittlung und Bewertung zukünftiger Fahrsituationen. Auch weitere Fahrzeugparameter, wie beispielsweise ein maximaler Lenkwinkel können als Komponenteninformationen ausgewertet werden.

Daneben können zeitlich veränderliche Informationen über das Kraftfahrzeug wie die Eigengeschwindigkeit und/oder ein Roll-, Nick- oder Gierwinkel und/oder die Masse und/oder der Ort des Schwerpunktes und/oder der Lenkwinkel wenigstens eines Rades und/oder die Winkelgeschwindigkeit wenigstens eines Rades des Kraftfahrzeugs erfasst und zur Prognose der zukünftigen Fahrsituationen genutzt werden.

Neben den Informationen über das Kraftfahrzeug selbst sind zur Prognose zukünftiger Fahrsituationen auch Daten über das Umfeld des Kraftfahrzeugs notwendig. Diese können insbesondere durch Nutzung von Sensoren am Kraftfahrzeug und/oder aus im Navigationssystem gespeicherten Informationen gewonnen werden. Vorteilhaft werden Daten der Fahrbahn erfasst, beispielsweise wenigstens ein Kurvenradius und/oder eine lokale Fahrbahnsteigung und/oder eine lokale Fahrbahnneigung und/oder ein lokaler Reibungskoeffizient und/oder eine Fahrbahnbreite. Daneben sollten Informationen über potentielle Hindernisse wie andere Kraftfahrzeuge, Fußgänger und feststehende Hindernisse gewonnen werden. Dabei können für bewegte Hindernisse wie Kraftfahrzeuge und Fußgänger insbesondere auch Daten ermittelt werden, die eine Bewegungsprognose für diese Hindernisse ermöglichen. Verfahren und Vorrichtungen zur Gewinnung von Umfelddaten sind im Stand der Technik bekannt und werden daher nicht weiter diskutiert.

Ein wesentliches Merkmal des erfindungsgemäßen Kraftfahrzeugs ist, dass das Fahrerassistenzsystem im zweiten Betriebsmodus die Steuerung des Kraftfahrzeugs nur temporär autonom durchführt. Daher ist das Fahrerassistenzsystem dazu ausgebildet, im zweiten Betriebsmodus bei Vorliegen einer Rückschaltbedingung, die auch mehrere einzelne Bedingungen umfassen kann, vom zweiten Betriebsmodus in den ersten Betriebsmodus zurückzuschalten. Um sicherzustellen, dass der Fahrer aktiv die Kontrolle über das Kraftfahrzeug übernimmt, ist es vorteilhaft, beim Erfüllen der Rückschaltbedingung zunächst eine Übernahmeanforderung an den Fahrer auszugeben. So wird insbesondere ein optischer, akustischer oder haptischer Hinweis an den Fahrer gegeben, dass das Fahrerassistenzsystem bereit ist, die Führung des Kraftfahrzeugs wieder an den Fahrer abzugeben. Die tatsächliche Übernahme der Fahrzeugführung durch den Fahrer kann also erst erfolgen, nachdem der Fahrer die Rückübernahme der Fahrzeugführung durch eine Handlung bestätigt hat. Zudem soll bei der Rückübernahme ein Wiederankoppeln der Lenkradbewegung an die Lenkbewegung erfolgen. Daher muss bei der Übernahme der Lenkradwinkel gleich dem Lenkradwinkel sein, der dem momentanen Lenkwinkel entspricht.

Durch das temporäre Schalten in den zweiten Betriebsmodus des Fahrerassistenzsystems wird im erfindungsgemäßen Kraftfahrzeug insbesondere erreicht, dass auch nach dem Eingreifen des Fahrerassistenzsystems eine normale Weiterfahrt möglich ist. Der Fahrbetrieb des Kraftfahrzeugs wird also durch das Eingreifen des Fahrerassistenzsystems nicht unterbrochen. Es ist damit eine kontinuierliche Fortbewegung des Kraftfahrzeugs während des Betriebs des Fahrerassistenzsystems im zweiten Betriebsmodus möglich. Da ein Stillstand des Kraftfahrzeugs vermieden werden kann, wird der Verkehrsfluss insgesamt weniger gestört als bei Sicherheitssystemen, die einen Stillstand des Kraftfahrzeugs herbeiführen. Zudem ist es durch die Fortführung des Fahrbetriebs möglich, die Belastung für den Fahrer zu verringern. Der Fahrer kann beim Betrieb des Fahrerassistenzsystems im zweiten Betriebsmodus zwar darauf hingewiesen werden, dass ein Eingriff des Fahrerassistenzsystems in den Fahrbetrieb erfolgt, insbesondere um den Fahrer darauf aufmerksam zu machen, dass er das Kraftfahrzeug nahe am physikalischen oder individuellen Grenzbereich oder voraussichtlich jenseits eines Komfortbereichs bewegt. Da plötzliche Bremsmanöver und der damit verbundene Schreck vermieden werden, wird die Fortsetzung der Fahrt jedoch für einen Großteil der Fahrer stark erleichtert.

Offensichtlich ist die im zweiten Betriebsmodus des Fahrerassistenzsystems erreichte Fortführung des Fahrbetriebs nur dann möglich, wenn das Fahrerassistenzsystem das Kraftfahrzeug sicher und zuverlässig durch die bevorstehende kritische Fahrsituation führen kann. In seltenen Fällen kann es jedoch möglich sein, dass eine sichere Fortsetzung des Fahrbetriebs nicht möglich ist. Für diese Situationen kann vorteilhaft ein sicheres Abstellen des Kraftfahrzeugs oder eine Führung des Kraftfahrzeugs derart, dass die Folgen eines unvermeidbaren Unfalls minimiert werden, vorgesehen sein.

Wie eingangs erwähnt beschreiben die Fahrereigenschaftsdaten Fahrereigenschaften, die es insbesondere erlauben, einen fahrerindividuellen Grenzbereich zu bestimmen, in dem ein Fahrer ein Kraftfahrzeug sicher und zuverlässig führen kann und/oder einen Komfortbereich zu bestimmen, in dem ein Fahrer das Kraftfahrzeug betreiben möchte. Es ist dabei möglich, dass die Fahrereigenschaftsdaten eine insbesondere numerische Beschreibung der fahrerischen Fähigkeiten und/oder der Belastbarkeit und/oder des Fahrverhaltens des Fahrers sind. Die Fahrereigenschaftsdaten können dabei diskrete Werte sein. So können die Fahrereigenschaftsdaten beispielsweise ein Fahrverhalten beschreiben, das die Werte sportlich, normal und komfortorientiert aufweisen kann. Dabei ist es möglich, den einzelnen Abstufungen numerische Werte zuzuweisen. Alternativ können die Fahrereigenschaftsdaten jedoch auch kontinuierlich oder vielstufig aufgelöst Fahrereigenschaften beschreiben. Beispielsweise ist es möglich, die fahrerischen Fähigkeiten eines Fahrers auf einer Skala zwischen 1 und 100 mit ganzteiligen Zwischenstufen zu bewerten. Dabei ist es auch möglich, dass als Fahrereigenschaftsdaten ein einzelner Zahlenwert bestimmt wird, der durch mehrere Fahrereigenschaften parametrisiert ist. Neben Fahrereigenschaften, die sich für einen gegebenen Fahrer nur sehr langsam ändern, wie die fahrerischen Fähigkeiten oder das Fahrverhalten des Fahrers, können auch schnell veränderliche Fahrereigenschaften, wie die Aufmerksamkeit eines Fahrers oder Ähnliches in den Fahrereigenschaftsdaten berücksichtigt werden.

Zur Ermittlung der Fahrereigenschaftsdaten ist es insbesondere möglich, dass das Kraftfahrzeug ein Bedienelement zur Eingabe der Fahrereigenschaftsdaten umfasst oder dass das Kraftfahrzeug ein Bedienelement zur Eingabe weiterer Fahrerdaten umfasst, wobei das Fahrerassistenzsystem zur Bestimmung der Fahrereigenschaftsdaten unter Berücksichtigung der weiteren Fahrerdaten ausgebildet ist. So ist es möglich, dass ein Fahrer vor Benutzung des Kraftfahrzeugs aufgefordert wird eine Selbsteinschätzung abzugeben, wobei die Selbsteinschätzung beispielsweise seine Belastbarkeit, seine fahrerischen Fähigkeiten oder eine Einschätzung seines Fahrverhaltens betreffen kann. Es ist möglich, die Eingabemöglichkeiten auf einige wenige diskrete Stufen zu beschränken oder eine Eingabe auf einer fein aufgelösten Skala zuzulassen. Ein in Abhängigkeit dieser Selbsteinschätzung ermittelter Wert kann direkt als Fahreigenschaftsdaten bestimmt werden. Es ist jedoch auch möglich, mehrere Selbsteinschätzungen abzufragen und die Fahrereigenschaftsdaten anschließend durch einen Algorithmus, der diese mehreren Selbsteinschätzungen verwertet, zu berechnen. Es kann vorteilhaft sein, alternativ oder ergänzend zu einer Selbsteinschätzung, weitere Fahrerdaten, wie das Alter eines Fahrers, die Fahrleistungen innerhalb eines gewissen Zeitraums oder Ähnliches abzufragen. Aus diesen Daten können für sich genommen oder in Kombination mit Selbsteinschätzungsdaten des Fahrers Fahrereigenschaftsdaten bestimmt werden.

Es ist dabei vorteilhaft, wenn die Fahrereigenschaftsdaten eines Fahrers speicherbar und wieder aufrufbar sind. So ist es möglich, dass an einem Bedienelement eine Liste mit bekannten Fahrern angezeigt wird und der Fahrer ein individuelles Fahrerprofil auswählt. Es ist jedoch auch möglich, dass ein Fahrer durch Kraftfahrzeugsysteme, beispielsweise eine Innenraumkamera, erkannt wird, und bei Erkennen eines bekannten Fahrers die entsprechenden Fahrereigenschaftsdaten geladen werden.

Die oben beschriebene Ermittlung der Fahrereigenschaftsdaten aus Bedieneingaben eines Fahrers stellt eine besonders einfache und für den Fahrer nachvollziehbare Möglichkeit dar, Fahrereigenschaftsdaten zu ermitteln. Alternativ oder ergänzend ist es jedoch möglich, dass das Fahrerassistenzsystem zur Erfassung des Fahrers und zur Auswertung des Fahrverhaltens zur Bestimmung und/oder Anpassung der Fahrereigenschaftsdaten ausgebildet ist. Dabei können insbesondere vom Fahrzeug tatsächlich gefahrene Trajektorien ermittelt und ausgewertet werden. Dabei können vorteilhaft nur solche Trajektorien berücksichtigt werden, die besonders gute Rückschlüsse auf die Fahrereigenschaften erlauben, beispielsweise Trajektorien, die durch Kurven oder während Überholvorgängen gefahren wurden.

Zur Bestimmung der Fahrereigenschaftsdaten ist es möglich, Parameter, die im Fahrbetrieb aufgetreten sind, auszuwerten. So können beispielsweise Beschleunigungen in Längs- und/oder Querrichtung, oder minimale Abstände zu Hindernissen ausgewertet werden. Dabei können Maximal- bzw. Minimalwerte während eines Fahrmanövers, wie das Durchfahren einer Kurve oder ein Überholvorgang oder Mittelwerte während bestimmter Zeiträume ausgewertet werden. Es ist jedoch auch möglich, zu ermitteln, wie nah der Fahrer das Kraftfahrzeug an einer Ideallinie oder einer von mehreren Ideallinien bewegt. Zur Auswertung des Fahrverhaltens können insbesondere statistische Verfahren und/oder neuronale Netze genutzt werden. Dabei ist es möglich, dass die Fahrereigenschaftsdaten jeweils ab Fahrbeginn oder einem anderen Zeitpunkt einer einzelnen Fahrt neu ermittelt werden, es ist aber auch möglich, dass für einen Fahrer bereits gespeicherte Fahrereigenschaftsdaten vorliegen, die im laufenden Fahrbetrieb angepasst werden können. Bei den gespeicherten Fahrereigenschaftsdaten kann es sich beispielsweise um Fahrereigenschaftsdaten handeln, die über ein Bedienelement eingegeben wurden. Handelt es sich bei den gespeicherten Fahrereigenschaftsdaten um Daten, die im laufenden Fahrbetrieb ermittelt oder bereits angepasst wurden, ist es insbesondere möglich, dass zusätzlich zu den Fahrereigenschaftsdaten selbst die Statistikdaten, aus denen die Fahrereigenschaft ermittelt wurde bzw. der Zustand des neuronalen Netzwerkes gespeichert werden.

Es ist auch möglich, das Fahrverhalten für unterschiedliche Zeitskalen auszuwerten, um beispielsweise mit einer langfristigen Mittelung die zeitlich unveränderlichen Fahrereigenschaften zu erfassen und mit kurzfristigen Mittelungen, beispielsweise über eine Fahrt, einen Tag oder eine Stunde kurzfristige Fluktuationen der Fahrereigenschaften zu erfassen.

Ergänzend kann das Kraftfahrzeug ein Fahrerzustandserfassungsmittel zur Erfassung eines Fahrerzustandes umfassen, wobei das Fahrerassistenzsystem zur Anpassung der Fahrereigenschaftsdaten in Abhängigkeit des Fahrerzustandes ausgebildet ist. Insbesondere ist es möglich, die Müdigkeit bzw. die Aufmerksamkeit eines Fahrers zu überwachen. Hierzu kann beispielsweise eine Kamera mit einer zugeordneten Bilderkennung genutzt werden, um die Pupillenbewegung, den Lidschlag oder andere Bewegungsmuster des Fahrers zu erfassen. Ergänzend oder alternativ können die Bedieneingaben im laufenden Fahrbetrieb, insbesondere die Bewegung eines Lenkrades, ausgewertet werden.

Die Erfassung des Fahrerzustandes ist vorteilhaft, da die durch die Fahrereigenschaftsdaten beschriebene Fahrereigenschaft vom Fahrerzustand abhängig sein kann. Beschreiben die Fahrereigenschafsdaten beispielsweise die fahrerischen Fähigkeiten des Fahrers, und ist der Fahrer müde oder unaufmerksam, so sind die fahrerischen Fähigkeiten, über die der Fahrer aktuell verfügt, schlechter als seine normalen fahrerischen Fähigkeiten. Auch die Belastbarkeit oder das Fahrverhalten eines Fahrers können von einem Fahrerzustand abhängen. Durch die zusätzliche Nutzung eines Fahrerzustanderfassungsmittels ist es möglich, die Fahrereigenschaftsdaten, die zunächst einen langsam veränderlichen Normalzustand einer Fahrereigenschaft beschreiben, derart anzupassen, dass sie den Ist-Zustand der Fahrereigenschaft im momentanen Fahrerzustand beschreiben. Insbesondere bei der oben beschriebenen Kombination einer langfristigen und einer kurzfristigen Statistik können damit die Fahrereigenschaftsdaten dynamisch an eine momentane Belastbarkeit oder fahrerische Fertigkeit angepasst werden.

Selbstverständlich ist es auch möglich, die Fahrereigenschaftsdaten in Abhängigkeit einer Fahrzeit oder einer zurückgelegten Strecke während der aktuellen Fahrt anzupassen. Dies ist vorteilhaft, da bei einem Großteil der Fahrer mit zunehmender Fahrzeit bzw. zunehmender zurückgelegter Strecke die Aufmerksamkeit des Fahrers sinkt bzw. die Müdigkeit des Fahrers steigt. Insbesondere wenn diese Fahrerzustände nicht separat erfasst werden, ist es daher vorteilhaft, diese Fahrerzustände näherungsweise in Abhängigkeit der Fahrzeit bzw. Strecke zu beschreiben und die Fahrereigenschaftsdaten wie oben beschrieben anzupassen.

Bei dem erfindungsgemäßen Kraftfahrzeug erfolgt die autonome Steuerung des Kraftfahrzeugs im zweiten Betriebsmodus nur temporär. Daher ist es möglich, dass das Fahrerassistenzsystem zum Umschalten vom zweiten in den ersten Betriebsmodus bei Vorliegen wenigstens einer Rückschaltbedingung ausgebildet ist, die von den Fahrereigenschaftsdaten abhängig ist. Die Rückschaltbedingung kann insbesondere sein, dass die Auslösebedingung nicht erfüllt ist und/oder dass die momentane Verkehrssituation und/oder Straßenführung eine sichere Rückgabe der Fahrzeugkontrolle an den Fahrer erlaubt. Wie eingangs erläutert wertet die Auslösebedingung im erfindungsgemäßen Kraftfahrzeug die Fahrereigenschaftsdaten aus, wodurch ein Nichterfülltsein der Auslösebedingung stets von den Fahrereigenschaftsdaten abhängig ist. Es ist jedoch auch möglich, dass die Art der Abhängigkeit der Rückschaltebedingung von der Verkehrssituation und/oder der Straßenführung durch eine Fahrereigenschaft beeinflusst wird.

Eine Rückübergabe der Fahrzeugführung an den Fahrer erfolgt vorzugsweise in einer Verkehrssituation und in einem Straßenabschnitt, in denen keine starken oder plötzlichen Eingriffe in die Fahrzeugführung notwendig sind. Dabei ist davon auszugehen, dass Fahrer mit hohen fahrerischen Fähigkeiten und sportliche Fahrer typischerweise schneller reagieren und sich einer Verkehrssituation besser anpassen können als Fahrer mit geringeren fahrerischen Fähigkeiten. Daher kann die Rückschaltbedingung einen Mindestabstand zu anderen Kraftfahrzeugen, den maximalen Geschwindigkeitsunterschied zu einem vorausfahrenden oder nachfolgenden Kraftfahrzeug, die minimale Länge einer geraden Strecke bis zum nächsten Lenkeingriff und/oder den minimalen Krümmungsradius des befahrenen Streckenabschnitts auswerten, wobei zumindest einige der Parameter in Abhängigkeit der Fahrereigenschaftsdaten angepasst werden können.

Bei Vorliegen einer Auslösebedingung soll das Kraftfahrzeug temporär autonom gesteuert werden. Es ist dabei möglich, dass das Fahrerassistenzsystem zur Bestimmung einer von der momentanen Position des Kraftfahrzeugs ausgehenden Steuertrajektorie und zur Steuerung des Kraftfahrzeugs entlang der Steuertrajektorie im zweiten Betriebsmodus ausgebildet ist, wobei das Fahrerassistenzsystem zur Bestimmung der Steuertrajektorie in Abhängigkeit der Fahrereigenschaftsdaten ausgebildet ist. Zur Bestimmung von Steuertrajektorien für ein autonomes Fahren eines Kraftfahrzeugs ist eine Vielzahl von Verfahren bekannt. Rein beispielhaft sei die Berechnung einer Trajektorie durch einen "Best-First"-Suchalgorithmus, wie beispielsweise den A*-Algorithmus, genannt, der kürzeste bzw. schnellste Trajektorien zwischen zwei Punkten unter vorgegebenen Randbedingungen berechnen kann. Selbstverständlich ist eine Berechnung der Steuertrajektorie im erfindungsgemäßen Kraftfahrzeug auch mit komplexeren Algorithmen, die weitere Fahrzeugparameter berücksichtigen, möglich.

Wesentlich ist, dass die Steuertrajektorie in Abhängigkeit der Fahrereigenschaftsdaten bestimmt wird. Dabei können insbesondere Randbedingungen bei der Bestimmung der Steuertrajektorie angepasst werden. So kann eine maximale Längs- oder Querbeschleunigung, eine maximale Gesamtbeschleunigung oder ein minimaler Abstand von Hindernissen angepasst werden. Eine solche Anpassung der Steuertrajektorie in Abhängigkeit der Fahrereigenschaftsdaten ist vorteilhaft, da unterschiedliche Fahrertypen ein unterschiedliches Fahrverhalten des Kraftfahrzeugs wünschen. Wünscht ein Fahrer beispielsweise ein komfortables Fahren, so ist er gerne bereit eine stärkere Verlangsamung des Kraftfahrzeugs hinzunehmen, wenn dadurch plötzlich auftretende oder starke Querbeschleunigungen vermieden werden können. Ein eher sportlicher Fahrer wird in einer ähnlichen Fahrsituation höhere und plötzliche Querbeschleunigungen gegenüber einer Verlangsamung des Kraftfahrzeugs bevorzugen. Die Fahrereigenschaftsdaten können auch bei der Bestimmung einer Zielposition der Trajektorie berücksichtigt werden. Typischerweise soll der autonome Fahrbetrieb zu einer Position erfolgen, an der, wie oben beschrieben, eine sichere Rückübergabe möglich ist. Es kann also eine Zielposition bestimmt werden, für die die Auslösebedingung voraussichtlich nicht erfüllt ist und/oder an der die prognostizierte Verkehrssituation bzw. Straßenführung eine sichere Rückübergabe der Fahrzeugführung an den Fahrer erlaubt. Diese Bedingungen können, wie oben zur Anpassung der Rückschaltbedingung erläutert, in Abhängigkeit der Fahrereigenschaftsdaten angepasst werden.

Durch die erläuterte autonome Steuerung des Kraftfahrzeugs kann bereits eine Vielzahl von kritischen Fahrsituationen entschärft werden. Dennoch ist es vorteilhaft, weitere Fahrzeugsysteme im zweiten Betriebsmodus autonom durch das Fahrerassistenzsystem zu steuern. So kann das Fahrerassistenzsystem im zweiten Betriebsmodus zur autonomen Steuerung der Lenkung und/oder der Bremssysteme und/oder des Motors und/oder des vorzugsweise automatischen Getriebes des Kraftfahrzeugs ohne Eingriffsmöglichkeit durch den Fahrer ausgebildet sein. Insbesondere ist auch eine Ansteuerung von Fahrzeugsystemen einzelner Räder, insbesondere von Einzelradbremsen, möglich. Es ist auch möglich, dass die gesamte Querführung oder die gesamte Längs- und Querführung des Kraftfahrzeugs durch das Fahrerassistenzsystem erfolgt. In diesem Fall kann das Kraftfahrzeug entlang beliebiger, physikalisch durch das Kraftfahrzeug fahrbarer, vorberechneter Trajektorien bewegt werden. Dies ist vorteilhaft, da bei ausschließlich autonomer Steuerung des Kraftfahrzeugs unerwartete Eingriffe des Fahrers in andere Steuersysteme die Durchführung der berechneten Trajektorien stören können.

Das Fahrassistenzsystem ist erfindungsgemäß zur Berechnung von Trajektoriendaten, die mehrere von der momentanen Position des Fahrzeugs ausgehende fahrbare Trajektorien beschreiben, unter wenigstens einer aus Egodaten und/oder Umfelddaten bestimmten Randbedingung ausgebildet und die Auslösebedingung ist zur Auswertung der Trajektoriendaten ausgebildet. Die Prognose zukünftiger Fahrsituationen und das Erkennen der Auslösebedingungen, insbesondere der Tatsache, dass eine Fahrsituation jenseits eines individuellen Grenzbereiches oder jenseits eines Komfortbereichs des Fahrers liegt, kann also durch Berechnung einer Vielzahl möglicher Trajektorien und eine Auswertung der Trajektorien erfolgen. Als fahrbare Trajektorien werden insbesondere solche Trajektorien betrachtet, die ohne Beeinträchtigung von Personen, des Kraftfahrzeugs und Hindernissen fahrbar sind. Insbesondere können bei der Bestimmung der fahrbaren Trajektorien auch Parameter des Kraftfahrzeugs selbst, wie ein maximaler Lenkwinkel, eine maximal mögliche Beschleunigung und die Reibungskraft zwischen Reifen und Straße berücksichtigt werden.

Die Fahrbarkeit der Trajektorien kann durch eine entsprechende Wahl der Randbedingungen sichergestellt werden. Das Fahrerassistenzsystem kann zudem zur Bestimmung der Randbedingungen oder wenigstens einer der Randbedingungen in Abhängigkeit der Fahrereigenschaftsdaten ausgebildet sein. Dabei ist es möglich mithilfe der Fahrereigenschaftsdaten die Randbedingungen derart zu ermitteln, dass sich alle ermittelten fahrbaren Trajektorien in einem Komfortbereich des Fahrers oder innerhalb eines individuellen Grenzbereichs des Fahrers befinden, das heißt, dass die als fahrbar ermittelten Trajektorien vom Fahrer selbst fahrbar wären. Es ist jedoch auch möglich, die Randbedingungen derart zu bestimmen, dass die fahrbaren Trajektorien zwar jenseits eines Komfortbereiches eines Fahrers liegen, aber einen Abstand vom physikalischen Grenzbereich in wenigstens einem Parameter aufweisen, der von den Fahrereigenschaftsdaten abhängig ist.

Randbedingungen, die zur Berechnung der Trajektorien genutzt und in Abhängigkeit der Fahrereigenschaften angepasst werden können, sind insbesondere eine maximale Längs- oder Querbeschleunigung bzw. eine maximale Gesamtbeschleunigung für das Kraftfahrzeug, ein Fahrbereich, der durch das Kraftfahrzeug befahrbar ist, wobei insbesondere ein Sicherheitsabstand von Hindernissen in Abhängigkeit der Fahrereigenschaft angepasst werden kann, oder ein Abstand von einer Maximalbelastung für eine Fahrzeugkomponente.

Eine besonders einfache Berechnung der Trajektorien ist möglich, wenn die Trajektorien zunächst ausschließlich als Trajektorien im Ortsraum bestimmt werden. Es ist jedoch auch möglich, Trajektorien direkt derart zu berechnen, dass sie bestimmten Orten feste Zeiten zuordnen oder dass an jedem Ort zusätzlich eine Geschwindigkeit berechnet wird. Des Weiteren können Trajektorien weitere Parameter, wie beispielsweise eine Ausrichtung eines Kraftfahrzeugs, insbesondere einen Schwimmwinkel, also den Winkel zwischen der Ausrichtung des Kraftfahrzeugs und der Bewegungsrichtung, umfassen. Es ist auch möglich, die Trajektorien durch eine vorwärts oder rückwärts rechnende Simulation der Fahrzeugbewegung zu berechnen, die eine Vielzahl von Parametern umfasst, wie beispielsweise die bereits genannten Ego- und Umfelddaten.

Beispielsweise können alle fahrbaren Trajektorien berechnet werden, die in einen vorgegebenen Straßenbereich führen. Die Endpunkte der Trajektorien können derart bestimmt werden, dass sie eine vorgegebene Entfernung zum Kraftfahrzeug aufweisen, oder die Trajektorien können derart berechnet werden, dass sie eine gewisse zeitliche Länge aufweisen.

Die die Trajektorien beschreibenden Parameter, insbesondere die Ortskoordinaten, sind typischerweise kontinuierliche Variablen. Dadurch müssten selbst bei einer technisch bedingten endlichen Auflösung sehr viele einzelne Trajektorien berechnet werden, um die möglichen Trajektorien zu finden. Zur Reduzierung der Trajektorienzahl sind insbesondere zwei Ansätze denkbar. So ist es möglich, dass das Fahrerassistenzsystem zur Berechnung der fahrbaren Trajektorien als wenigstens eine parametrisierte Trajektorienschar aus einer Vielzahl von fahrbaren Trajektorien und/oder als mehrere einzelne fahrbare Trajektorien, die durch einen vorgegebenen oder anpassbaren Abstand ihrer Parameter, insbesondere der Ortskoordinaten, beabstandet sind, ausgebildet ist. Im ersten Fall werden die Trajektorien also zumindest teilweise als kontinuierliche Trajektorienschar angegeben. So können beispielsweise bei einer Nutzung reiner Ortstrajektorien zwei Begrenzungstrajektorien bestimmt werden, aus denen in Abhängigkeit wenigstens eines Parameters die weiteren dazwischenliegenden Trajektorien berechnet werden. Eine entsprechende Parametrisierung ist selbstverständlich für mehrere Parameter gleichzeitig möglich.

Insbesondere bei komplexeren Berechnungsverfahren für die Trajektorien, also beispielsweise einer Berechnung der Trajektorien anhand eines simulierten physikalischen Modells, können solche kontinuierlichen Trajektorienscharen jedoch sehr aufwendig zu berechnen sein. Insbesondere in diesen Fällen ist es vorteilhaft, diskrete Trajektorien zu bestimmen, wobei die einzelnen Trajektorien mit einem vorgebbaren Abstand beabstandet sind. Damit wird also eine Diskretisierung der einzelnen Parameter mit einer vorgebbaren Auflösung erreicht. In Einzelfällen kann es aber auch vorteilhaft sein, Trajektorien, die mehrere Parameter umfassen, in einigen der Parameter als kontinuierliche Schar und in den anderen der Parameter diskretisiert darzustellen.

Zur Berechnung der Trajektorien ist eine Vielzahl von Ansätzen möglich. Wie erwähnt ist es besonders einfach, zunächst ausschließlich Raumkurven als Trajektorien anzugeben. In diesem Fall können zunächst Fahrschläuche ermittelt werden, innerhalb derer sich kein Hindernis befindet. Ein Fahrschlauch bezeichnet in diesem Fall einen Bereich, der vollständig durch fahrbare Trajektorien bedeckt werden kann. Ein solcher Fahrschlauch und die zwischen den Grenzen des Fahrschlauchs liegenden Trajektorien können dadurch beschrieben werden, dass zunächst zwei geometrische Begrenzungstrajektorien für den Fahrschlauch bestimmt werden, die den Fahrschlauch begrenzen. Solche Begrenzungstrajektorien weisen typischerweise einen vorgegebenen Abstand vom Rand eines Fahrbereichs auf. Das heißt, sie laufen mit einem vorgegebenen Sicherheitsabstand an Hindernissen in der Fahrzeugumgebung vorbei. Ist zwischen zwei dieser Begrenzungstrajektorien kein Hindernis, so wird typischerweise ein Fahrschlauch durch diese beiden Begrenzungstrajektorien gebildet, falls alle Trajektorien zwischen ihnen befahrbar sind. Ergänzend kann innerhalb des Fahrschlauchs noch eine Idealtrajektorie bestimmt werden, die beispielsweise die kürzeste Strecke bis zu einem vorgegebenen Punkt oder Streckenabschnitt beschreibt, oder eine, die mit der höchsten Geschwindigkeit befahrbar ist.

Die weiteren Trajektorien des Fahrschlauchs können dann berechnet werden, indem zwischen den beiden Begrenzungstrajektorien beziehungsweise zwischen den Begrenzungstrajektorien und der Idealtrajektorie interpoliert wird. Alternativ ist es auch möglich, die Idealtrajektorie zu variieren, beispielsweise indem zur Idealtrajektorie benachbarte Trajektorien berechnet werden, die nur in einer Richtung von der Idealtrajektorie abweichen und vorzugsweise genauso viele oder weniger Wendepunkte aufweisen. Wird das erläuterte Verfahren für jeden Teil des Fahrbereichs durchgeführt, durch den ein Fahrschlauch führbar ist, so können zumindest diejenigen Trajektorien im Fahrbereich ermittelt werden, die von Fahrzeugen typischerweise befahren werden und die mit den höchsten Geschwindigkeiten fahrbar sind beziehungsweise bei vorgegebener Geschwindigkeit zu den geringsten Kräften in Querrichtung zum Kraftfahrzeug führen.

In diesem Zusammenhang ist wesentlich, dass es unnötig ist, jede fahrbare Trajektorie zu bestimmen. Wie im Folgenden noch näher erläutert wird, wird ein autonomer Fahrbetrieb des Kraftfahrzeugs insbesondere dann erfolgen, wenn nur noch wenige Fahrmöglichkeiten für das Kraftfahrzeug möglich sind, das heißt wenige Trajektorien bzw. schmale Trajektorienscharen ermittelt werden. Ist es in einer Fahrsituation möglich sehr viele Trajektorien unter gegebenen Randbedingungen zu ermitteln, so ist in der Regel die Auslösebedingung nicht erfüllt. Es soll also kein autonomer Fahrbetrieb des Kraftfahrzeugs erfolgen und das Berechnen der fahrbaren Trajektorien kann beendet werden. Um die Berechnung der Fahrbahntrajektorien zu beschleunigen ist es zudem möglich, bestimmte Gruppen von Trajektorien aus der Berechnung auszuschlie-βen. So sind beispielsweise Trajektorien mit einer Vielzahl von Wendepunkten nur mit einer geringen Geschwindigkeit fahrbar. Im erfindungsgemäßen Kraftfahrzeug ist es daher typischerweise unnötig, solche Trajektorien zu betrachten.

Das Fahrerassistenzsystem kann insbesondere zur Bestimmung wenigstens eines Geschwindigkeitsprofils für jede der fahrbaren Trajektorien ausgebildet sein. Ein Geschwindigkeitsprofil kann im einfachsten Fall ausgehend von einer rein geometrischen Trajektorie bestimmt werden, indem die auftretenden Zentrifugalkräfte der Trajektorie, die sich aus der Masse des Kraftfahrzeugs, der Geschwindigkeit des Kraftfahrzeugs an dem Punkt und der lokalen Krümmung, das heißt dem Kurvenradius, ergeben, mit einem vorgegebenen oder lokal bestimmten Grenzwert verglichen werden. Der Grenzwert für die Zentrifugalkraft entspricht für eine Fahrt im physikalischen Grenzbereich der Reibungskraft zwischen dem Kraftfahrzeug und der Straße. Der Grenzwert kann dabei in Abhängigkeit von den Fahrereigenschaftsdaten angepasst werden.

Es ist dabei möglich, dass ein solcher Grenzwert für jeden der Reifen des Kraftfahrzeugs getrennt bestimmt wird und mit Zentrifugalkräften, die an diesem Rad wirken, verglichen wird. Dies ist insbesondere vorteilhaft, da abhängig von Roll- und Nickwinkel des Kraftfahrzeugs unterschiedliche Normalkräfte auf die einzelnen Reifen wirken können, wodurch die Reibkraft selbst bei gleichem Reibungskoeffizienten unterschiedlich ist. Der Reibungskoeffizient zwischen Reifen und Straße kann fest vorgegeben sein, es ist jedoch auch möglich, ihn abhängig von beispielsweise der Reifenart, der Laufleistung des Reifens, den lokalen Eigenschaften der Straße, die beispielsweise durch eine Kamera erfasst wurden oder den Witterungsbedingungen anzupassen.

Aus der global oder lokal bestimmten maximalen Reibkraft kann damit, unter Umständen unter Berücksichtigung eines, insbesondere von den Fahrereigenschaftsdaten abhängigen, Sicherheitsintervalls für die Reibkraft, eine maximal fahrbare Geschwindigkeit für jeden Punkt der Trajektorie festgelegt werden. Werden zusätzlich die maximalen Beschleunigungs- und Verzögerungswerte des Kraftfahrzeugs berücksichtigt, kann ein Geschwindigkeitsprofil der maximal möglichen Geschwindigkeiten für jeden Punkt der Trajektorie bestimmt werden. Auch die Maximalwerte für die Beschleunigung und/oder Verzögerung des Kraftfahrzeugs können in Abhängigkeit von den Fahrereigenschaftsdaten angepasst werden.

Werden bewegte Hindernisse nicht derart berücksichtigt, dass von ihnen im betrachteten Zeitintervall überstrichene Bereiche vollständig aus dem Fahrbereich ausgenommen werden, so müssen zur Trajektorienberechnung ohnehin Geschwindigkeitsgrenzwerte berücksichtigt werden. In diesem Fall ist es vorteilhaft, zumindest zwei Geschwindigkeitsprofile für eine Trajektorie, nämlich eines für die Maximalgeschwindigkeiten und eines für die Minimalgeschwindigkeiten am jeweiligen Ort der Trajektorie zu bestimmen.

Als Umschaltbedingung zum Umschalten in den zweiten Betriebsmodus des Fahrerassistenzsystems können insbesondere Bedingungen genutzt werden, die direkt auf der Menge der fahrbaren Trajektorien operieren, oder solche, die Bedingungen für weitere Fahrzeugparameter aus den fahrbaren Trajektorien ableiten. So ist das Fahrerassistenzsystem erfindungsgemäß zur Bestimmung eines Grenzwerts für einen Fahrzeugparameter aus den Trajektoriendaten und den Fahrereigenschaftsdaten ausgebildet und die Auslösebedingung oder eine der Auslösebedingungen ist das Über- oder Unterschreiten des Grenzwerts. Der Fahrzeugparameter kann dabei insbesondere die momentane Ist-Geschwindigkeit des Kraftfahrzeugs sein.

Das Vorgehen zum Erhalt eines solchen Grenzwerts soll beispielhaft für die Fahrzeuggeschwindigkeit erläutert werden. Es ist wie erläutert vorteilhaft, wenn für jede der Trajektorien zumindest ein Geschwindigkeitsprofil bestimmt wurde. Insbesondere kann ein Profil bestimmt werden, das die maximalen Geschwindigkeiten für jeden Punkt angibt, mit denen die Trajektorie mit den maximalen Beschleunigungs- bzw. Verzögerungswerten eines Komfortbereichs oder eines individuellen oder physikalischen Grenzbereichs befahrbar ist. Durch diese Berechnung lässt sich für jede der Trajektorien eine maximale Geschwindigkeit des Kraftfahrzeugs am momentanen Aufenthaltsort des Kraftfahrzeugs bestimmen, mit der diese Trajektorie befahrbar ist. Überschreitet die momentane Geschwindigkeit des Kraftfahrzeugs die für eine Trajektorie an der Fahrzeug-Ist-Position bestimmte Höchstgeschwindigkeit, so ist diese Trajektorie unter den gegebenen Randbedingungen nicht fahrbar. Somit kann für jede Trajektorie im Ortsraum bestimmt werden, ob diese Trajektorie mit der momentanen Geschwindigkeit des Kraftfahrzeugs fahrbar ist oder nicht. Als Grenzwert für die Fahrzeuggeschwindigkeit kann damit eine Geschwindigkeit gewählt werden, die einem fahrereigenschaftsabhängigen Bruchteil der höchsten für eine der Trajektorien ermittelten Höchstgeschwindigkeit an der Fahrzeug-Ist-Position entspricht. Alternativ kann eine Geschwindigkeit gewählt werden, bei der eine fahrereigenschaftsdatenabhängige Mindestzahl oder ein fahrereigenschaftsabhängiger Mindestanteil der Trajektorien oder ein Fahrschlauch mit einer fahrereigenschaftsdatenabhängigen Mindestbreite mit einer Geschwindigkeit, die dem Grenzwert entspricht, befahrbar ist.

Das oben beschriebene Vorgehen erlaubt eine besonders einfache Bestimmung, ob die Umschaltbedingung vorliegt. Bei dem beschriebenen Vorgehen wird jedoch nur ein einzelnes Geschwindigkeitsprofil berücksichtigt. Insbesondere in Verkehrssituationen, in den sich mehrere bewegte Hindernisse im Umfeld des Kraftfahrzeugs befinden, oder beim Betrieb des Kraftfahrzeugs in einem Grenzbereich, bei dem unter Umständen starke geschwindigkeitsabhängige seitliche Verschiebungen des Kraftfahrzeugs auftreten können, kann eine getrennte Bestimmung der geometrischen Form der Trajektorie und des zugehörigen Geschwindigkeitsprofils nicht mehr möglich sein. Insbesondere in diesem Fall kann es vorteilhaft sein, statt eines Grenzwerts für eine Ist-Größe des Kraftfahrzeugs eine Umschaltbedingung zu nutzen, die direkt die fahrbaren Trajektorien auswertet.

So kann die Auslösebedingung oder eine der Auslösebedingungen ein Unterschreiten eines Minimalwerts für die Anzahl der durch die Trajektoriendaten beschriebenen fahrbaren Trajektorien oder eine minimale Breite eines Wertebereichs wenigstens eines Parameters, der eine durch die Trajektoriendaten beschriebene Trajektorienschar parametrisiert, sein, wobei das Fahrerassistenzsystem zur Bestimmung des Minimalwerts oder der minimalen Breite in Abhängigkeit von den Fahrereigenschaftsdaten ausgebildet ist. Die minimale Breite bzw. der Minimalwert kann dabei beispielsweise aus einer Wertetabelle entnommen werden oder algorithmisch aus numerischen Fahrereigenschaftsdaten berechnet werden. Die Nutzung dieser Auslösebedingung beruht auf der Idee, dass bei einem Fahren weit weg von einem physikalischen Grenzbereich, einem individuellen Grenzbereich oder einem Komfortbereich unter den Randbedingungen des jeweiligen Bereiches sehr viele fahrbare Trajektorien bestimmt werden können, da Trajektorien stets variiert werden können und weiterhin alle Randbedingungen erfüllen. Die Grenzen eines Bereichs der durch Randbedingungen beschrieben ist, sind aber dadurch definiert, dass bei einem Verlassen des so definierten Bereichs die Randbedingungen durch keine Trajektorie erfüllt sind. Der jeweilige Grenzbereich in dem ein Umschalten in den zweiten Betriebsmodus erfolgen soll, ist also dadurch gekennzeichnet, dass die Zahl der fahrbaren Trajektorien stark abnimmt. Sind die Trajektorien als beabstandete diskrete Trajektorien berechnet, so kann ein solches Abnehmen der Trajektorienzahl schlicht durch Vergleich der Trajektorienzahl mit einem Minimalwert festgestellt werden. Sobald dieser Minimalwert unterschritten wird, gilt die Umschaltbedingung als erfüllt und das Fahrerassistenzsystem wechselt in den zweiten Betriebsmodus. Dabei ist es möglich, dass Trajektorien, die in zumindest einem Parameter durchgehend einen Mindestabstand unterschreiten, nur als eine einzelne Trajektorie gezählt werden.

Sind die fahrbaren Trajektorien jedoch als parametrisierte Trajektorienschar dargestellt, so entspricht ein Abnehmen der Trajektorienzahl einer Einschränkung des Wertebereichs für zumindest Teile der Parameter der Trajektorienschar. Die Umschaltbedingung soll in diesem Fall also abhängig von der Breite des Wertebereichs wenigstens eines Parameters wenigstens einer der Trajektorienscharen sein. Hierfür ist eine Vielzahl von Möglichkeiten denkbar. So kann für jede Trajektorienschar ein Phasenraumvolumen bestimmt werden, indem die Breiten der Wertebereiche für die verschiedenen Parameter jeder der Trajektorienscharen multipliziert werden. Es ist aber auch möglich nur einige der Parameter oder einen einzelnen Parameter, insbesondere eine Breite im Ortsraum, auszuwerten.

Als Umschaltbedingung kann also das Unterschreiten eines Minimalwertes durch die Summe der Phasenraumvolumina oder des Produkts der ausgewählten Parameter der einzelnen Trajektorien genutzt werden. Es ist aber auch möglich, nur einige der Trajektorienscharen zu berücksichtigen, beispielsweise nur solche, die entlang einer Sollroute verlaufen. Insbesondere kann auch nur die Trajektorienschar berücksichtigt werden, deren Phasenraumvolumen am größten ist, beziehungsweise bei der das Produkt mehrerer Breiten von Wertebereichen gewählter Parameter oder ein einzelner Wertebereich eines gewählten Parameters am größten ist.

Es ist selbstverständlich möglich, vor Anwenden der Umschaltbedingung einige der Trajektorien zu verwerfen. So ist es möglich, dass bei der Berechnung der Trajektorien nur einige der Randbedingungen berücksichtigt werden und anschließend vor Auswertung der Umschaltbedingung jene Trajektorien verworfen beziehungsweise nicht berücksichtigt werden, die die weiteren Randbedingungen nicht erfüllen. Ergänzend oder alternativ können auch verschiedene Randbedingungen zur Berechnung der fahrbaren Trajektorien und zur Berücksichtigung bei der Auswertung der Umschaltbedingung genutzt werden. So ist es beispielsweise möglich, dass zur Berechnung der fahrbaren Trajektorien zunächst Grenzwerte genutzt werden, die einen physikalischen Grenzbereich beschreiben, vor der Auswertung der Umschaltbedingung jedoch jene Trajektorien verworfen werden, die jenseits eines Komfortbereichs des Fahrers liegen. Damit ist es möglich, zunächst festzustellen, ob ausreichend viele fahrbare Trajektorien im Komfortbereich des Fahrers liegen, um die Führung des Kraftfahrzeugs beim Fahrer zu belassen. Ist dies nicht der Fall, wobei jedoch immer noch Trajektorien im Komfortbereich des Fahrers möglich sind, so kann eine Führung des Kraftfahrzeugs durch das Fahrerassistenzsystem mit einer der Trajektorien im Komfortbereich erfolgen. Ist dies jedoch nicht möglich, so kann zur autonomen Führung des Kraftfahrzeugs eine der fahrbaren Trajektorien genutzt werden, die zwar physikalisch möglich ist, jedoch jenseits des Komfortbereichs des Fahrers liegt.

Vorzugsweise kann das Fahrerassistenzsystem dazu ausgebildet sein, wenigstens eine Randbedingung durch Untergewichten der Fahrereigenschaftsdaten anzupassen und die Trajektoriendaten neu zu berechnen, wenn keine fahrbare Trajektorie ermittelt werden kann. Wie eingangs erläutert, können die Fahrereigenschaftsdaten bei der Berechnung der fahrbaren Trajektorien unterschiedlich stark berücksichtigt werden. So können fahrbare Trajektorien beispielsweise so berechnet werden, dass alle fahrbaren Trajektorien innerhalb eines Komfortbereichs des Fahrers liegen, es ist aber auch möglich, dass auch fahrbare Trajektorien jenseits des Komfortbereich eines Fahrers berechnet werden, wobei in Abhängigkeit der Fahrereigenschaftsdaten ein Mindestabstand zu einem physikalischen Grenzbereich erreicht wird. Zuletzt ist es auch möglich, bei der Berechnung der fahrbaren Trajektorien die Fahrereigenschaftsdaten nicht zu berücksichtigen.

Werden nun die Fahrereigenschaftsdaten bei der Bestimmung der fahrbaren Trajektorien zunächst stark berücksichtigt, das heißt die Randbedingungen werden so gewählt, dass ausschließlich Trajektorien im Komfortbereich eines Fahrers bestimmt werden, ist es möglich, dass zunächst keine fahrbaren Trajektorien ermittelt werden können. In diesem Fall kann durch Untergewichten der Fahrereigenschaftsdaten auf weitere Randbedingungen übergegangen werden, die beispielsweise auch Trajektorien jenseits des Komfortbereichs innerhalb des individuellen Grenzbereichs oder gar jenseits des individuellen Grenzbereichs innerhalb des physikalischen Grenzbereichs zulassen. Diese Anpassung der Randbedingungen kann auch stufenweise erfolgen. Dabei ist es möglich, die Anpassung der Randbedingungen vor dem Auswerten der Auslösebedingung durchzuführen, so dass die Auslösebedingung auf Voraussagedaten angewendet wird, die bereits Trajektorien mit angepassten Randbedingungen umfassen, es ist jedoch auch möglich, dass bereits das Ermitteln keiner fahrbaren Trajektorie unter den ursprünglichen Randbedingungen ein Erfüllen der Auslösebedingungen darstellt und damit die Neuberechnung der Trajektorien insbesondere dazu dient, eine Steuertrajektorie für das autonome Steuern des Kraftfahrzeugs zu ermitteln.

Daneben betrifft die Erfindung ein Verfahren zur Steuerung eines Kraftfahrzeugs, umfassend wenigstens ein Fahrerassistenzsystem, wobei das Kraftfahrzeug in einem ersten Betriebsmodus des Fahrerassistenzsystems durch den Fahrer steuerbar ist, umfassend die Schritte:
- Ermitteln von eine Fahrereigenschaft beschreibenden Fahrereigenschaftsdaten durch das Fahrerassistenzsystem,
- Erfassen von das Kraftfahrzeug betreffenden Egodaten und das Kraftfahrzeugumfeld betreffenden Umfelddaten,
- Vorausberechnen von wenigstens eine zukünftige Fahrsituation des Kraftfahrzeugs beschreibenden Voraussagedaten durch Auswertung von das Kraftfahrzeug betreffenden Egodaten und das Kraftfahrzeugumfeld betreffenden Umfelddaten, wobei die Voraussagedaten Trajektoriendaten umfassen, die mehrere von der momentanen Position des Kraftfahrzeugs ausgehende fahrbare Trajektorien beschreiben und durch das Fahrerassistenzsystem unter wenigstens einer aus den Egodaten und/oder den Umfelddaten bestimmten Randbedingung berechnet werden,
- Überprüfen, ob eine Auslösebedingung oder wenigstens eine von mehreren Auslösebedingungen erfüllt ist, durch das Fahrerassistenzsystem, wobei die Auslösebedingung zumindest die die Trajektoriendaten umfassenden Voraussagedaten und die Fahrereigenschaftsdaten auswertet, wobei durch das Fahrerassistenzsystem (2) ein Grenzwert für einen Fahrzeugparameter aus den Trajektoriendaten und den Fahrereigenschaftsdaten bestimmt wird und die Auslösebedingung oder eine der Auslösebedingungen das Über- oder Unterschreiten des Grenzwerts ist,
- temporäres Umschalten in den zweiten Betriebsmodus des Fahrerassistenzsystems, falls die Auslösebedingung erfüllt ist, und
- autonomes Steuern des Kraftfahrzeugs ohne Eingriffsmöglichkeit des Fahrers durch das Fahrerassistenzsystem im zweiten Betriebsmodus.

Weitere Vorteile und Einzelheiten der Erfindung ergeben sich aus den folgenden Ausführungsbeispielen sowie den zugehörigen Zeichnungen. Dabei zeigen:
- Fig. 1: schematisch ein Ausführungsbeispiel eines erfindungsgemäßen Kraftfahrzeugs,
- Fig. 2: eine Verkehrssituation,
- Fig. 3: eine weitere Verkehrssituation, und
- Fig. 4: ein Ablaufdiagramm eines Ausführungsbeispiels des erfindungs-gemäßen Verfahrens.

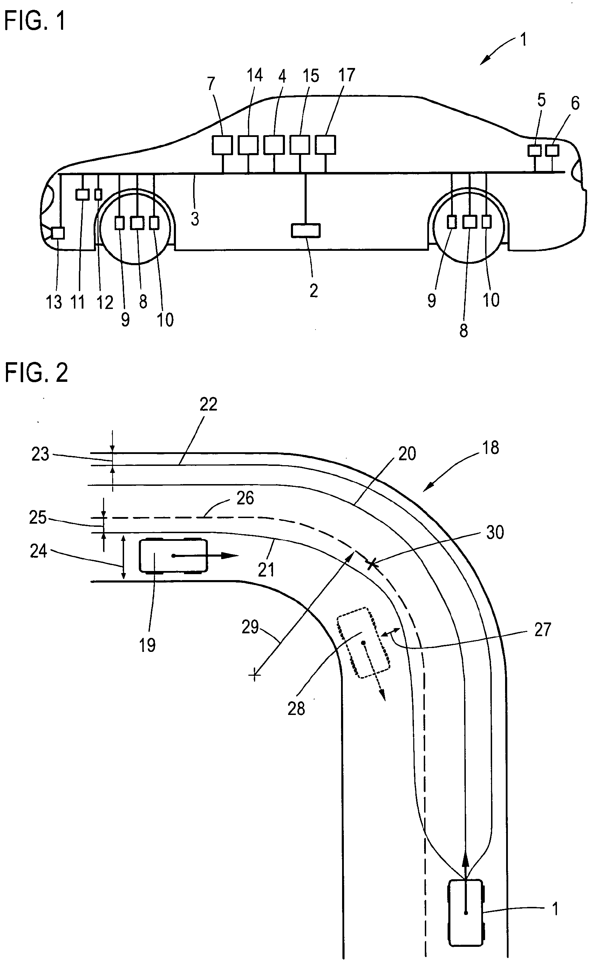

Fig. 1 zeigt ein Kraftfahrzeug 1 mit einem Fahrerassistenzsystem 2, das bei Erfüllen einer Auslösebedingung, die Voraussagedaten über eine zukünftige Fahrsituation, die fahrbare Trajektorien umfasst, sowie Fahrereigenschaftsdaten, die eine numerische Beschreibung der fahrerischen Fähigkeiten und des Fahrverhaltens des Fahrers darstellen, auswertet, zum Umschalten in einen zweiten Betriebsmodus ausgebildet ist, in dem das Kraftfahrzeug 1 autonom gesteuert wird. Das Kraftfahrzeug 1 ist mit einem Drive-by-Wire-System ausgestattet, so dass im normalen Fahrbetrieb Lenkbewegungen eines Fahrers durch einen Lenkwinkelsensor 7 erfasst werden und die Lenkbewegungen, unter Umständen nach einer Weiterverarbeitung durch ein nicht gezeigtes Steuersystem, über einen CAN-Bus 3 an die Lenkung 8 übertragen werden. Ebenso können auch Betätigungen eines nicht gezeigten Bremspedals, Gaspedals und eines Bedienelements der Schaltung an die entsprechenden Einrichtungen des Kraftfahrzeugs 1 übertragen werden. Im normalen Fahrbetrieb erfolgt die Führung des Kraftfahrzeugs 1 primär durch den Fahrer. So kann der Fahrer entweder das Kraftfahrzeug vollständig führen oder der Fahrer kann bei der Führung des Kraftfahrzeugs durch Fahrerassistenzsysteme wie beispielsweise eine automatische Abstandsregelung oder einen Spurassistenten unterstützt werden. Wesentlich ist, dass in einem ersten Betriebsmodus, der einen üblichen Fahrbetrieb darstellt, der Fahrer stets die vollständige Kontrolle über das Fahrzeug hat, das heißt, unterstützende Fahrerassistenzsysteme jederzeit übersteuern kann.

Im Kraftfahrzeug 1 ist zudem ein Bedienelement 14 zur Eingabe der Fahrereigenschaftsdaten vorgesehen. Über das Bedienelement 14 kann der Fahrer mit dem Fahrerassistenzsystem 2 interagieren und neue Fahrereigenschaftsdaten eingeben, Fahrereigenschaftsdaten im Rahmen eines Fahrerprofils laden oder die entsprechenden Fahrereigenschaftsdaten anpassen. Die über das Bedienelement 14 erfassten Fahrereigenschaftsdaten können im laufenden Betrieb des Kraftfahrzeugs 1 noch angepasst werden. So ist das Fahrerassistenzsystem 2 ausgebildet, über den CAN-Bus des Kraftfahrzeugs im laufenden Fahrbetrieb stets die Daten einer Vielzahl von Sensoren zu ermitteln und so Informationen über die vom Fahrer tatsächlich gefahrenen Trajektorien zu gewinnen. Die vom Fahrer gefahrenen Trajektorien werden durch das Fahrerassistenzsystem 2 statistisch ausgewertet, wobei speziell Trajektorien, die Überholvorgänge und Kurvenfahrten beschreiben, ausgewertet werden. Dabei werden die Abstände des Kraftfahrzeugs zu Hindernissen, die Geschwindigkeiten des Kraftfahrzeugs bei Kurvenfahrten und die Entfernung der tatsächlich gefahrenen Trajektorie von einer Ideallinie ausgewertet.

Durch eine statistische Auswertung der Trajektorien wird ermittelt, ob der Fahrer eher sportlich oder eher komfortabel fährt und es wird die fahrerische Fähigkeit des Fahrers eingeschätzt. Dabei werden zwei getrennte Auswertungen durchgeführt, wobei bei einer ersten Auswertung langfristige Mittelwerte für Fahrereigenschaftsdaten berechnet werden, die über längere Zeiträume die ursprünglich am Bedienelement 14 eingegebenen Fahrereigenschaftsdaten anpassen und es werden für kurze Zeitintervalle, wie die aktuelle Fahrt, aktuelle Korrekturdaten berechnet, wodurch eine stärkere statistische Gewichtung der Fahrzeugführung während der aktuellen Fahrt erreicht wird.

Das Kraftfahrzeug 1 umfasst zudem ein Fahrerzustandserfassungsmittel 17, das als Kamera mit zugeordneter Bildverarbeitungseinrichtung ausgebildet ist. Über das Fahrerzustandserfassungsmittel 17 werden der Lidschlag und die Pupillenbewertung des Fahrers ausgewertet, um Müdigkeit oder ein Abgelenktsein des Fahrers zu ermitteln. Ergänzend werden die Bewegungen des Lenkrads 7 ausgewertet, um die Daten des Fahrerzustandserfassungsmittels 17 zu ergänzen. Mit diesen zusätzlichen Daten ist es möglich, die Fahrereigenschaftsdaten derart zu korrigieren, dass insbesondere Daten, die fahrerischen Fähigkeiten betreffen, angepasst werden, wenn der Fahrer müde oder abgelenkt ist.

Während des Betriebs des Kraftfahrzeugs 1 kann das Fahrerassistenzsystem 2 über den CAN-Bus 3 stets Informationen einer Vielzahl von Fahrzeugsystemen abfragen, um zukünftige Fahrsituationen des Kraftfahrzeugs 1 für ein vorgegebenes Zeitintervall vorauszuberechnen. Das Fahrerassistenzsystem 2 kann Daten eines Navigationssystems 4 nutzen, um eine geplante Route des Kraftfahrzeugs 1 zu ermitteln und weitere Informationen über den Straßenverlauf, beispielsweise eine Neigung oder eine Steigung der Straße, Kurvenradien, örtliche Verkehrsregeln und Ähnliches abzufragen. Die aus dem Navigationssystem 4 gewonnenen Daten können zudem durch Daten eines Umfeldsensors 13, der als Kamera ausgeführt ist, ergänzt werden. Im Kraftfahrzeug ist zudem eine Positionsbestimmungseinrichtung 5 zur Bestimmung der Fahrzeugposition, beispielsweise ein GPS-Sensor, vorgesehen.

Über eine Kommunikationseinrichtung 6 kann das Fahrerassistenzsystem 2 zudem weitere Umfeldinformationen gewinnen, indem es mit weiteren Kraftfahrzeugen über eine Car-2-Car-Kommunikation oder mit Infrastruktureinrichtungen und/oder anderen Kraftfahrzeugen durch eine Car-2-X-Kommunikation kommuniziert. Damit können direkt Informationen über das Fahrverhalten weiterer Kraftfahrzeuge gewonnen werden, um ein verbessertes Umfeldmodell zu berechnen. Über die Kommunikationseinrichtung 6 kann auch eine drahtlose Kommunikation mit Datenbanken, insbesondere Internetdatenbanken, erfolgen, um das Umgebungsmodell zu ergänzen.

Das Fahrerassistenzsystem 2 ist zudem dazu ausgebildet, eine Vielzahl von Sensoren auszulesen, die Parameter des Kraftfahrzeugs 1 messen. So können die Stellung eines automatischen Getriebes 12 und die Parameter einer Motorsteuerung 11 ausgelesen werden. Aus den Daten eines Lenkwinkelsensors 7 sowie an einer Lenkung 8 angeordneten Sensoren kann ein Lenkwinkel des Kraftfahrzeugs 1 bestimmt werden. Weitere Sensoren sind Sensoren am Bremssystem 10 und Rotationssensoren 9 an den Rädern.

Das Fahrerassistenzsystem 2 ist ausgebildet, aus den zahlreichen Egodaten des Kraftfahrzeugs 1 und den zahlreichen ermittelten Umfelddaten ein Dynamikmodell für das eigene Kraftfahrzeug sowie ein detailliertes Umfeldmodell zu errechnen, wobei die Bewegung weiterer Kraftfahrzeuge durch ein Dynamikmodell prognostiziert wird. Zur Ermittlung der zukünftigen Fahrsituationen berechnet das Fahrerassistenzsystem 2 mehrere fahrbare Trajektorien für das Kraftfahrzeug 1. Bei der Berechnung der fahrbaren Trajektorien werden mehrere Randbedingungen berücksichtigt, die die Fahrbarkeit der Trajektorie sicherstellen, beispielsweise maximale Längs- und Querbeschleunigungen, und die die Fahrereigenschaften berücksichtigen. Die Berücksichtigung der Fahrereigenschaften erfolgt derart, dass abhängig von der Fahrereigenschaft die Randbedingungen, die eine Fahrbarkeit der Trajektorie sicherstellen, weiter eingeschränkt werden. Hierfür sind im Fahrerassistenzsystem 2 Wertetabellen vorgesehen, aus denen abhängig von den Fahrereigenschaftsdaten für zumindest einige der Randbedingungen entweder absolute Maximal- oder Minimalwerte oder Relativwerte angegeben sind, die einen Bruchteil eines physikalisch möglichen Grenzwerts angeben, der als Randbedingung genutzt wird. Die zeitliche oder örtliche Länge der Trajektorien wird in Abhängigkeit der Verkehrsdichte und/oder Fahrzeuggeschwindigkeit angepasst.

Solche Trajektorien können bestimmt werden, indem zunächst ein Fahrbereich für das Kraftfahrzeug 1 ermittelt wird, in dem ein Fahrbetrieb des Kraftfahrzeugs 1 möglich ist. In diesem Bereich werden zunächst Trajektorien bestimmt, die durch das Kraftfahrzeug 1 geometrisch befahrbar sind und anschließend können Geschwindigkeitsprofile für diese Trajektorien ermittelt werden. Alternativ ist es hier auch möglich, Trajektorien direkt als Trajektorien zu berechnen, die sowohl Orts- als auch Geschwindigkeitsdaten, sowie unter Umständen weitere Parameter umfassen.

Aus den so berechneten Trajektorien kann auf vielfältige Weise bestimmt werden, ob eine kritische Fahrsituation für das Kraftfahrzeug zu erwarten ist. Insbesondere kann aus den möglichen Trajektorien wenigstens ein Grenzwert für einen Fahrzeugparameter, insbesondere die Fahrzeuggeschwindigkeit, bestimmt werden und bei Überschreiten dieses Grenzwertes, bei Überschreiten einer aus den Trajektorien bestimmten maximalen Geschwindigkeit, ein kritischer Zustand festgestellt werden und in den zweiten Betriebsmodus gewechselt werden, in dem der Betrieb des Kraftfahrzeugs autonom ohne Eingriffsmöglichkeit durch den Fahrer erfolgt. Alternativ oder ergänzend kann das Fahrerassistenzsystem 2 die Trajektoriendaten auch direkt auswerten. Insbesondere wird ausgewertet, ob ein durch die Trajektorien bedeckter Bereich, also ein Fahrschlauch, eine gewisse Mindestbreite aufweist oder ob eine gewisse Mindestanzahl beabstandeter Trajektorien durch das Kraftfahrzeug fahrbar ist.

Wird die Mindestanzahl an Trajektorien beziehungsweise die Mindestbreite des Fahrschlauchs unterschritten und wurde zumindest eine fahrbare Trajektorie ermittelt, so wechselt das Fahrerassistenzsystem 2 in den zweiten Betriebsmodus. Im zweiten Betriebsmodus erfolgt die Steuerung der Lenkung 8, des Bremssystems 10, des Motors 11 sowie des automatischen Getriebes 12 autonom durch das Fahrerassistenzsystem 2, derart, dass das Kraftfahrzeug 1 entlang einer Steuertrajektorie bewegt wird, die durch die Steuereinrichtung 2 aus den fahrbaren Trajektorien gewählt wird.

Wird ermittelt, dass keine fahrbare Trajektorie unter den zuvor bestimmten Randbedingungen ermittelt werden kann, so ist das Fahrassistenzsystem 2 dazu ausgebildet, die Randbedingungen anzupassen, wobei der Einfluss der Fahrereigenschaftsdaten auf einige der Randbedingungen verringert wird, indem die fahrereigenschaftsdatenabhängigen Randbedingungen entweder nicht berücksichtigt werden, oder zwischen den fahrereigenschaftsabhängigen und fahrereigenschaftsunabhängigen Randbedingungen, die die physikalische Fahrbarkeit der Trajektorie sicherstellen, interpoliert wird.

Ist eine solche Anpassung der Randbedingungen zur Bestimmung einer Fahrbahntrajektorie notwendig, so gilt dies als Erfüllung der Auslösebedingung und das Fahrerassistenzsystem 2 wechselt in den zweiten Betriebsmodus, wobei die Führung des Kraftfahrzeugs entlang einer der mit den angepassten Randbedingungen berechneten fahrbaren Trajektorie erfolgt. Alternativ wäre es auch möglich, dass ein Wechsel in den zweiten Betriebsmodus erst nach mehrmaliger Anpassung der Randbedingungen erfolgt.

Das Fahrerassistenzsystem 2 ist zudem dazu ausgebildet, in dem Fall, in dem auch bei vollständiger Nichtberücksichtigung der Fahreigenschaftsdaten keine fahrbare Trajektorie berechnet werden kann, eine Notfalltrajektorie zu berechnen und diese autonom durchzuführen. Kann keine physikalisch fahrbare Trajektorie berechnet werden, so ist davon auszugehen, dass eine kontrollierte Fortsetzung des Fahrbetriebs nicht möglich ist. In diesem Fall kann eine Trajektorie berechnet werden, die das Kraftfahrzeug zum Stillstand bringt, wobei Schäden an Personen, dem Kraftfahrzeug und Drittgegenständen minimiert werden.

Das Fahrerassistenzsystem 2 ist zudem ausgebildet, bei einem Wechsel in den zweiten Modus die Hinweiseinrichtung 15 anzusteuern, die als Signalleuchte ausgebildet ist, um den Fahrer darauf hinzuweisen, dass das Kraftfahrzeug in einen autonomen Fahrbetrieb wechselt. Zudem wird in diesem Fall die Kommunikationseinrichtung 6 angesteuert, um einen Warnhinweis über Car-2-Car-Kommunikation zu versenden und weitere Kraftfahrzeuge darauf hinzuweisen, dass das eigene Kraftfahrzeug autonom geführt wird.

Im zweiten Betriebsmodus überprüft das Fahrerassistenzsystem 2 in regelmäßigen Abständen, ob eine Rückschaltbedingung vorliegt. Die Rückschaltbedingung für einen Rückwechsel in den ersten Betriebsmodus ist, dass die Auslösebedingung nicht vorliegt und dass die Verkehrssituation sowie die Straßenführung an der Position des Kraftfahrzeugs 1 eine sichere Rückübergabe der Fahrzeugkontrolle an den Fahrer erlaubt. Dabei werden die Abstände zu weiteren Verkehrsteilnehmern und anderen Hindernissen und eine voraussichtliche Zeit bis zum nächsten notwendigen Lenkeingriff ausgewertet, wobei die jeweiligen Mindestwerte in Abhängigkeit der Fahrereigenschaftsdaten angepasst werden.

Fig. 2 zeigt eine Verkehrssituation, in der sich Kraftfahrzeug 1 auf eine Kurve 18 zubewegt. Auf der entgegenkommenden Spur kommt Kraftfahrzeug 19 entgegen. Zur Bestimmung des Umfeldmodells werden zunächst Umfelddaten, die die Fahrbahn betreffen, berücksichtigt. Eine Fahrbahn kann durch einen lokalen Krümmungsradius 29 der Fahrbahn, eine Fahrbahnneigung und eine lokale Fahrbahnsteigung beschrieben werden. Ausgehend von diesen Daten und den Egodaten des Fahrzeugs, sowie einem Dynamikmodell, das das entgegenkommende Kraftfahrzeug 19 beschreibt, können mögliche Trajektorien auf vielfältige Weise berechnet werden. Im Folgenden soll als einfaches Beispiel eine Berechnung der Trajektorien genutzt werden, bei der Trajektorien zunächst als reine Ortskurven bestimmt werden, für die in einem separaten Schritt zumindest ein mögliches Geschwindigkeitsprofils bestimmt wird. Selbstverständlich ist es alternativ möglich, exaktere Verfahren zur Trajektorienberechnung zu nutzen, die beispielsweise den Roll- und Nickwinkel des Kraftfahrzeugs berücksichtigen oder auch eine Driftbewegung des Kraftfahrzeugs, also eine Bewegung mit hohem Schwimmwinkel, berechnen können.

Zur rein geometrischen Berechnung von Trajektorien werden zunächst die Grenztrajektorien 21 und 22 berechnet, die den durch das Kraftfahrzeug 1 befahrbaren Fahrschlauch begrenzen. Die Grenztrajektorien 21, 22 sind zum einen durch den maximalen Lenkwinkel des Kraftfahrzeugs 1 und zum anderen durch den Fahrbereich bestimmt. Die Bestimmung des Fahrbereichs ist abhängig von den Fahrereigenschaftsdaten. Diese beeinflussen den Abstand 23, 24 von den Rändern der Fahrbahn, ob und wieweit die Trajektorie des Kraftfahrzeugs eine Gegenfahrbahn mitnutzen kann, was durch den Doppelpfeil 25 angedeutet ist und welcher Mindestabstand 27 von Hindernissen gehalten werden muss. Aufgrund des Dynamikmodells wird vorausberechnet, dass sich das Kraftfahrzeug 19 zu dem Zeitpunkt, zudem das Kraftfahrzeug 1 das Kraftfahrzeug 19 passiert, an der Position 28 befindet. Die linke Randtrajektorie 21 muss daher einen Mindestabstand 27 zu dieser prognostizierten Position halten, der fahrereigenschaftsdatenabhängig angepasst wird. Ergänzend ist in Fig. 2 eine Ideallinie 20 für das Kraftfahrzeug 1 gezeigt, die unter der zusätzlichen Randbedingung bestimmt ist, dass kein Teil des Kraftfahrzeugs 1 in die Gegenfahrspur eindringt.

Die Idealtrajektorie 20 wurde mit einem A*-Verfahren berechnet. Die geometrisch möglichen Trajektorien können bestimmt werde, indem eine Vielzahl von Zwischentrajektorien zwischen der Idealtrajektorie 20 und den Begrenzungstrajektorien 21, 22 bestimmt werden. Hierbei können die Lenkwinkel im Bereich der Ist-Position des Kraftfahrzeugs variiert werden, um so einen kontinuierlichen Übergang zwischen den verschiedenen vorbestimmten Trajektorien zu erhalten. Die zwischen den Trajektorien 20, 21, 22 liegenden Trajektorien können jedoch auf vielfältige andere Arten ermittelt werden, wobei jedoch insbesondere nur solche Trajektorien ermittelt werden, die maximal eine vorgegebene Zahl von Wendepunkten aufweisen.

Ergänzend sei angemerkt, dass es auch möglich ist, ausschließlich die Trajektorien 21, 22 vorzuberechnen und den Raum zwischen diesen Trajektorien anschließend durch eine Interpolation zwischen diesen Trajektorien zu füllen. Die geometrischen Trajektorien können entweder als einzelne Trajektorien bestimmt werden, indem Trajektorien mit einem vorgegebenen Abstand, beispielsweise von einigen cm berechnet werden. Es ist jedoch auch möglich, die Trajektorien als eine oder mehrere Trajektorienscharen zu berechnen, die über wenigstens einen Parameter parametrisiert sind. Beispielsweise können Trajektorien über eine Stärke der Krümmung und eine Länge des gekrümmten Bereichs definiert werden. Werden bei einer solchen Beschreibung der Trajektorien Wertebereiche für die Parameter vorgegeben, so ist es möglich, eine Vielzahl von Trajektorien sehr kompakt darzustellen.

Den einzelnen berechneten Trajektorien kann jeweils ein Geschwindigkeitsprofil zugewiesen werden. Sind die Trajektorien als Trajektorienschar definiert, ist es auch möglich, das Geschwindigkeitsprofil ebenso zu parametrisieren. Das Geschwindigkeitsprofil beschreibt einen Verlauf der Geschwindigkeiten des Kraftfahrzeugs 1 bei einer Bewegung entlang der Trajektorie, wobei eine Bewegung entlang der Trajektorien mit diesen Geschwindigkeiten eine oder mehrere Grenzbedingungen erfüllt. Eine entscheidende Grenzbedingung ist hierbei, dass die auf das Kraftfahrzeug 1 in der Kurve wirkende Zentrifugalkraft die Haftreibungskraft zwischen den Reifen 18 des Kraftfahrzeugs 1 und der Straße nicht übersteigt. Die Haftreibungskraft zwischen dem Kraftfahrzeug und der Straße kann im einfachsten Fall aus der Fahrzeugmasse und einem Reibkoeffizienten zwischen Straße und Reifen bestimmt werden. Es ist jedoch auch möglich, beispielsweise Nick- und Rollwinkel des Kraftfahrzeugs zu berücksichtigen, wodurch sich die Normalkräfte auf die einzelnen Reifen des Kraftfahrzeugs voneinander unterscheiden und damit unterschiedliche Reibkräfte für jeden der Reifen 18 des Kraftfahrzeugs 1 vorliegen.

Der Reibungskoeffizient für die Reifen ist abhängig vom Reifentyp für das Kraftfahrzeug festgelegt. Es ist auch möglich, diesen Reibungswert für die Reifen abhängig von der Fahrleistung des Reifens anzupassen oder dynamisch in bestimmten Fahrsituationen zu ermitteln. Ein Reibungswert für die Fahrbahn kann als fester Wert abgeschätzt werden. Es ist jedoch vorteilhaft, diesen Wert abhängig von Informationen beispielsweise eines Navigationssystems und einem oder mehrerer Fahrzeugsensoren anzupassen. Durch eine Kamera oder die Daten eines Navigationssystems wird die Art des Stra-βenbelags bestimmt. Aus der Art des Straßenbelags kann eine gute Voraussage für den Reibwert ermittelt werden. Zudem können durch eine Kamera beziehungsweise eine Bildauswertung Verunreinigungen der Straße erkannt werden und der lokale Reibungskoeffizient dementsprechend angepasst werden. Zudem können Witterungsbedingungen, insbesondere die Temperatur und die Feuchtigkeit, berücksichtigt werden.

Durch einen Vergleich der Reibungskraft zwischen dem Kraftfahrzeug 1 und der Straße beziehungsweise den einzelnen Reifen 18 und der Straße mit den auftretenden Zentrifugalkräften für die Trajektorien können Grenzgeschwindigkeiten bestimmt werden, für die die Reibkraft und die Zentrifugalkraft gleich ist. Vorteilhaft können jedoch auch zusätzliche Beschleunigungen durch ein Beschleunigen oder Bremsen des Kraftfahrzeugs bei diesem Vergleich mit berücksichtigt werden. Der Betrag der Vektorsumme von Längs- und Querbeschleunigung des Kraftfahrzeugs multipliziert mit dessen Masse darf dabei die Reibkraft nicht überseigen. Dies entspricht dem Prinzip des Kammschen Kreises. Typischerweise wird ein Höchstgeschwindigkeitsprofil für eine Trajektorie bestimmt, wobei bei der Bestimmung des Höchstgeschwindigkeitsprofils insbesondere Sicherheitsabstände zwischen den durch die Trajektorie auf das Kraftfahrzeug wirkende Beschleunigungskräften und der Reibkraft vorgesehen werden. Die Sicherheitsabstände werden dabei in Abhängigkeit der Fahrereigenschaftsdaten bestimmt. Ergänzend oder alternativ ist auch möglich, fahrereigenschaftsabhängige Maximalwerte für die Beschleunigungen vorzugeben.

Als Ergebnis liegt im Fahrerassistenzsystem eine Vielzahl von fahrbaren Trajektorien vor, die jeweils eine Ortskurve und ein der Ortskurve zugeordnetes Geschwindigkeitsprofil aufweisen. Aus diesen Trajektorien kann eine Grenzbedingung für einen momentanen Fahrzeugparameter, insbesondere die Fahrzeuggeschwindigkeit berechnet werden, wobei bei Überschreiten dieser Grenzbedingung ein Wechsel in den zweiten Betriebsmodus des Fahrerassistenzsystems 2 erfolgt. Es ist auch möglich zu ermitteln, wie viele in ihren Parametern beabstandete Trajektorien, also insbesondere nebeneinander verlaufende Trajektorien im Ortsraum, befahren werden können und bei Unterschreiten eines Grenzwertes, der von den Fahrereigenschaftsdaten abhängt, in den zweiten Betriebsmodus zu wechseln. Selbstverständlich ist es auch möglich, das Geschwindigkeitsprofil jeder Trajektorie zu nutzen, um Trajektorien zu verwerfen, deren Anfangsgeschwindigkeit so hoch ist, dass sie durch das Kraftfahrzeugs 1 mit der Ist-Geschwindigkeit des Kraftfahrzeugs 1 nicht mehr befahren werden können. Nach Verwerfen dieser nicht befahrbaren Trajektorien verbleibt ein Fahrschlauch für das Kraftfahrzeug 1 mit einer gewissen geometrischen Breite. Unterschreitet diese Breite einen fahrereigenschaftsdatenabhängigen Grenzwert, so wird in den zweiten Betriebsmodus gewechselt.

Das Erfüllen der Umschaltbedingung und die Wahl der Steuertrajektorie soll im Folgenden dargestellt werden. Bewegt sich das Kraftfahrzeug 1 mit niedriger Geschwindigkeit, so sind alle Trajektorien zwischen den Begrenzungstrajektorien 21 und 22 fahrbar. Die geometrische Form der berechneten Trajektorien ist nur durch die Vorgabe einer maximalen Wendepunktzahl beschränkt. Die Auslösebedingung ist die Breite der Trajektorienschar am Scheitelpunkt 30 der Kurve 18, also bei niedrigen Geschwindigkeiten der Abstand zwischen den Begrenzungstrajektorien 21 und 22 senkrecht zur Fahrtrichtung.

Bei höheren Geschwindigkeiten des Kraftfahrzeugs 1 werden einige der bei niedrigen Geschwindigkeiten fahrbaren Trajektorien nicht mehr fahrbar. So ergeben sich aus der Anfangsgeschwindigkeit der jeweiligen Trajektorie minimale Seitenbeschleunigungen, die von einem lokalen Krümmungsradiums 29 der jeweiligen Trajektorie abhängen. Aufgrund eines fahrereigenschaftsdatenabhängig vorgegeben Maximalwerts für die Querbeschleunigung, können diese Trajektorien nicht mehr berechnet werden oder werden nach der Berechnung verworfen. Bei zunehmender Geschwindigkeit sind bei Erreichen einer Grenzgeschwindigkeit nur noch eine oder mehrere diskrete Idealtrajektorien unter Einhaltung der vorgegebenen fahreigenschaftsdatenabhängigen Randbedingungen fahrbar. Mit zunehmender Geschwindigkeit verengt sich also die geometrische Breite der Trajektorienschar, bis nur noch die Idealtrajektorie 20 fahrbar ist. Unterschreitet die Breite der Trajektorienschar einen vorgegebenen Grenzwert, so wechselt das Fahrerassistenzsystem in den zweiten Betriebsmodus und führt das Kraftfahrzeug 1 autonom entlang der Idealtrajektorie 20.

Nach dem Durchqueren der Kurve 26 ist wieder eine breite Trajektorienschar fahrbar. Damit kann das Fahrerassistenzsystem abhängig von der Verkehrssituation, der Streckenführung und den Fahrereigenschaftsdaten in den ersten Betriebsmodus wechseln.

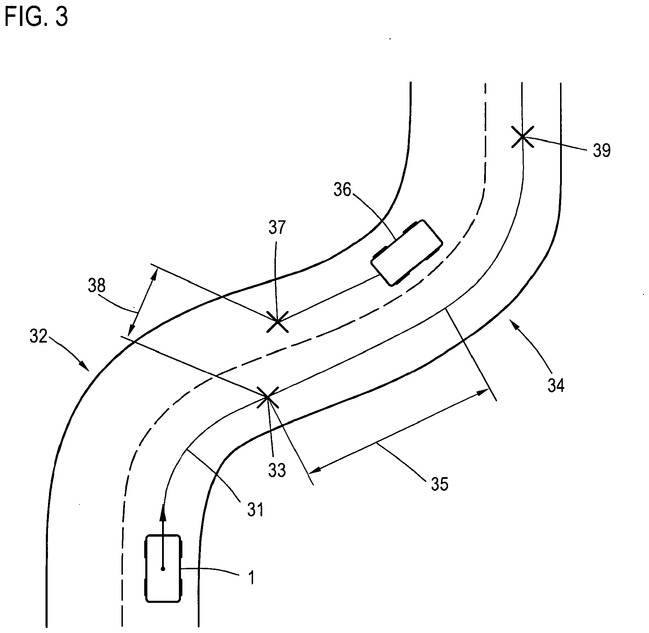

Fig. 3 zeigt eine weitere Verkehrssituation, in der sich das Fahrassistenzsystem 2 des Kraftfahrzeugs 1 bereits im zweiten Betriebsmodus befindet und das Fahrerassistenzsystem 2 das Kraftfahrzeug 1 entlang der Steuertrajektorie 31 durch die Kurve 32 führt. Während der Führung des Kraftfahrzeugs im zweiten Betriebsmodus überprüft das Fahrerassistenzsystem 2 in regelmäßigen Abständen, ob eine Rückschaltbedingung zur Rückübergabe der Fahrzeugführung an den Fahrer erfüllt ist. Dies soll beispielhaft für den Wegpunkt 33 erläutert werden.

Bei Überprüfung der Rückschaltbedingung soll ermittelt werden, ob die Straßenführung und die Verkehrssituation eine sichere Rückübergabe der Fahrzeugführung an den Fahrer des Kraftfahrzeugs 1 erlauben. Hierzu wird überprüft, wie lang ein im Wesentlichen gerader Straßenabschnitt ist, den das Kraftfahrzeug nach der Rückübergabe zurücklegen kann, bis ein erneuter Lenkreingriff durch den Fahrer notwendig ist. Diese Länge ist durch den Doppelpfeil 35 markiert. Daneben ist die Rückschaltbedingung von der Verkehrssituation und dabei vom Abstand zu weiteren Verkehrsteilnehmern abhängig. In der Zeit, die das Kraftfahrzeug 1 benötigte, um Punkt 33 zu erreichen, hat sich das entgegenkommende Kraftfahrzeug 36 zur Position 37 bewegt. Der Abstand zwischen dem eigenen Kraftfahrzeug 1 und dem Kraftfahrzeug 36 entspricht damit dem durch den Doppelpfeil 38 gekennzeichneten Abstand.

Sowohl der durch Doppelpfeil 38 gekennzeichnete Abstand zum Kraftfahrzeug 36 als auch der durch Doppelpfeil 35 gekennzeichnete Abstand zur Kurve 34 sind ausreichend, um einem Fahrer mit einer hohen Fahrfertigkeit genügend Zeit zur Rückübernahme der Führung des Kraftfahrzeugs 1 zu geben. Zeigen also die Fahreigenschaftsdaten in der Steuereinrichtung 2 des Kraftfahrzeugs 1 an, dass der Fahrer eine hohe Fahrfertigkeit besitzt, so kann an Position 33 eine Rückgabe der Fahrzeugführung an den Fahrer erfolgen. Zeigen jedoch die Fahrereigenschaftsdaten, dass der Fahrer nur eine mittlere bis schlechte Fahrfähigkeit hat, oder dass ein Fahrer mit einer hohen Fahrfertigkeit müde oder abgelenkt ist, so wird ermittelt, dass die durch Doppelpfeile 35, 38 gezeigten Abstände nicht ausreichend sind, wodurch keine Rückübergabe der Fahrzeugführung an den Fahrer des Kraftfahrzeugs 1 erfolgt und die autonome Führung des Kraftfahrzeugs entlang der Trajektorie 31 zu der Position 39 fortgesetzt wird.

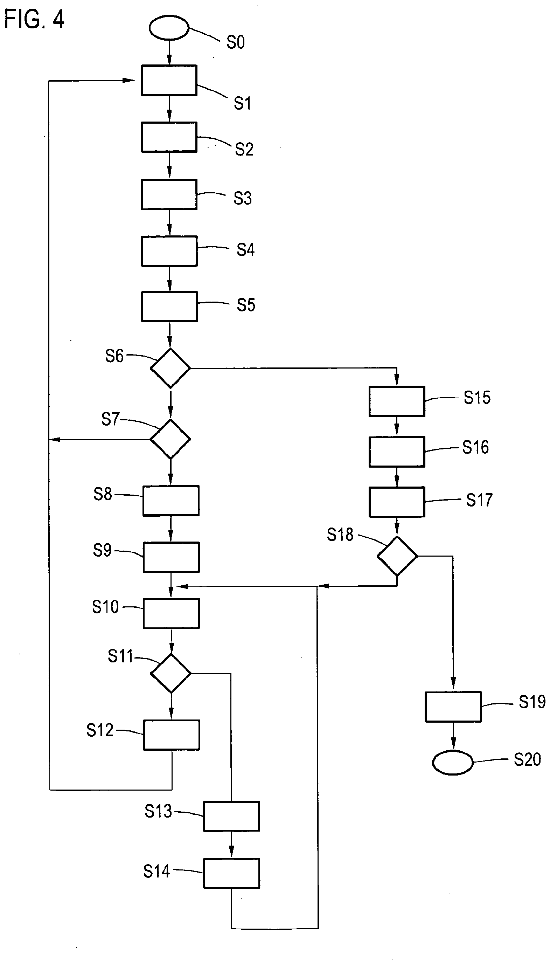

Fig. 4 zeigt ein Ausführungsbeispiel des Verfahrens zur Steuerung eines Kraftfahrzeugs. Wie für den Fachmann offensichtlich erkennbar, sind einige der gezeigten Schritte optional und stellen vorteilhafte Ausprägungen des Verfahrens dar.

Das Verfahren beginnt im Schritt S0 bei stillstehendem Kraftfahrzeug. Im Schritt S1 kann ein Fahrer erkannt werden und es können über den Fahrer vorliegende Fahreigenschaftsdaten geladen werden. Alternativ ist es auch möglich, dass ein Fahrer über ein Bedienelement Fahreigenschaftsdaten eingibt oder weitere Fahrerdaten eingibt, aus denen Fahrereigenschaftsdaten bestimmt werden. So kann der Fahrer zu einer Selbsteinschätzung seiner Fahrfertigkeiten aufgefordert werden, wobei eine Auswahlmöglichkeiten zwischen sportlichem und komfortablem Fahren gegeben werden kann, oder der Fahrer kann aufgefordert werden, seine jährliche Fahrleistung einzugeben, um daraus seine Fahrerfahrung abzuschätzen.

Nach der Eingabe bzw. dem Laden der Fahrereigenschaftsdaten kann die Fahrt begonnen werden. Während der Fahrt wird im Schritt S2 eine Vielzahl von Ego- und Umfelddaten ermittelt. Dabei kann eine Vielzahl von Informationen über die Fahrbahn und das Umfeld der Fahrbahn, insbesondere die Fahrbahnneigung, Steigung, Kurvenradien, Fahrbahnbreiten sowie Informationen, die Rückschlüsse auf Reibungskoeffizienten der Straße ermöglichen, erfasst werden. Diese Daten können nach Bestimmung der Position des Kraftfahrzeugs aus lokalen Datenbanken oder Datenbanken, auf die drahtlos zugegriffen wird, entnommen werden. Insbesondere kann die Datenbank eines Navigationssystems genutzt werden. Daneben können gespeicherte oder durch im Kraftfahrzeug angeordnete Sensoren erfasste Egodaten des Kraftfahrzeugs erfasst werden. Auch die Daten von bewegten Hindernissen, insbesondere von weiteren Kraftfahrzeugen oder Fußgängern können erfasst werden, wobei künftige Bewegungen von bewegten Hindernissen durch ein Bewegungsmodell abgebildet werden. Aus den gesammelten und bestimmten Daten werden ein Umfeldmodell sowie ein Dynamikmodell für das eigene Kraftfahrzeug sowie weitere bewegte Hindernisse ermittelt.

Im Schritt S3 werden aus den zuvor ermittelten Ego- und Umfelddaten die von einem Fahrer tatsächlich gefahrenen Trajektorien bestimmt. Durch eine Auswertung der gefahrenen Trajektorien mittels eines statistischen Verfahrens oder eines neuronalen Netzwerkes können, wie zu Fig. 1 beschrieben, die Fahrereigenschaftsdaten angepasst werden. Ergänzend wird in Schritt S3 der Fahrerzustand eines Fahrers erfasst, um bei Müdigkeit oder Unaufmerksamkeit des Fahrers die Fahrereigenschaftsdaten entsprechend anzupassen. Bei dieser Anpassung kann zudem eine gefahrene Zeit oder Entfernung seit Fahrtbeginn berücksichtigt werden.

In Schritt S4 werden aus dem Umfeldmodell sowie dem Dynamikmodell unter Berücksichtigung der Fahrereigenschaftsdaten Randbedingungen für die zu berechnenden Trajektorien ermittelt. Dabei können Fahrereigenschaftsdaten genutzt werden, um über Nachschlagetabellen Obergrenzen für gewisse Parameter zu bestimmen oder um physikalische Grenzwerte zu skalieren oder einen Sicherheitsabstand zwischen physikalischen Grenzen und den Randbedingungen vorzusehen. Als Randbedingung kann ein durch das Kraftfahrzeug befahrbarer Fahrbereich festgelegt werden. Dabei ist es möglich, Bereiche, die durch Hindernisse blockiert sind, bereits aus dem Fahrbereich auszunehmen, es ist jedoch auch möglich den Fahrbereich zunächst derart zu bestimmen, dass er Hindernisse umfasst, wobei bei der anschließenden Trajektorienberechnung die Trajektorien derart berechnet werden, dass Hindernisse vermieden werden.

In Schritt S5 wird eine Vielzahl von Trajektorien unter den in Schritt S4 bestimmten Rahmenbedingungen berechnet. Dabei können entweder eine Vielzahl von im Parameterraum beabstandeten Einzeltrajektorien berechnet werden. Es ist jedoch auch möglich, zumindest Teile der Trajektorien als Trajektorienscharen zu berechnen.

Anschließend wird im Schritt S6 überprüft, ob in Schritt S5 zumindest eine Trajektorie unter den gegebenen Randbedingungen berechnet werden konnte. War es möglich, zumindest eine Trajektorie in Schritt S5 zu berechnen, so wird das Verfahren in Schritt S7 fortgesetzt.

Im Schritt S7 wird überprüft, ob eine Auslösebedingung, die die berechneten fahrbaren Trajektorien unter Berücksichtigung der Fahrereigenschaftsdaten auswertet, erfüllt ist. Die Berücksichtigung der Fahrereigenschaftsdaten kann dabei bereits dadurch erfolgen, dass Teile der fahrbaren Trajektorien verworfen werden oder bestimmte fahrbare Trajektorien durch die Randbedingungen erst gar nicht berechnet wurden. Es ist jedoch auch möglich, einen aus den Trajektorien bestimmten Grenzwert in Abhängigkeit der Fahrereigenschaftsdaten zu bestimmen oder eine minimale Breite eines Wertebereichs wenigstens eines Parameters einer Trajektorienschar oder einen Minimalwert für die Anzahl der beschriebenen Trajektorien in Abhängigkeit der Fahrereigenschaftsdaten zu bestimmen. Die verschiedenen Möglichkeiten für die Auslösebedingung wurden bereits mit Bezug auf Fig. 1 erläutert und teilweise beispielhaft mit Bezug auf Fig. 2 dargestellt. Wird im Schritt S7 festgestellt, dass die Auslösebedingung nicht erfüllt ist, so wird das Verfahren mit dem Schritt S2 fortgesetzt und die Führung des Kraftfahrzeugs verbleibt beim Fahrer.

Wird jedoch festgestellt, dass die Auslösebedingung erfüllt ist, so kann im Schritt S8 eine Warnung an den Fahrer, beispielsweise durch Aktivieren einer Hinweiseinrichtung, sowie an weitere Kraftfahrzeuge, beispielsweise durch eine Fahrzeug-zu-Fahrzeug-Kommunikation, ausgegeben werden.

Anschließend kann im Schritt S9 eine der zuvor berechneten Trajektorien als Steuertrajektorie ausgewählt werden, entlang der das Kraftfahrzeug geführt werden soll.

In Schritt S10 erfolgt eine Steuerung des Kraftfahrzeugs autonom durch das Fahrerassistenzsystem entlang der im Schritt S9 bestimmten Steuertrajektorie.

Nach einem vorgegebenen Intervall oder kontinuierlich wird im Schritt S11 überprüft, ob eine Rückschaltbedingung, die wie zuvor erläutert von Fahrereigenschaftsdaten abhängig ist, erfüllt ist. Ist eine solche Rückschaltbedingung erfüllt, so erfolgt im Schritt S12 eine Rückübergabe der Fahrzeugführung an den Fahrer. Hierbei wird zunächst ein Hinweis an den Fahrer gegeben, dass eine solche Rückübernahme gewünscht ist. Anschließend wird auf eine Handlung des Fahrers gewartet, die eine Übernahme der Fahrzeugführung durch den Fahrer anzeigt. Zudem wird im Schritt S12 sichergestellt, dass der Lenkwinkel dem Lenkradwinkel entspricht. Nach Durchführen dieser weiteren Schritte wird das Verfahren im Schritt S2 fortgesetzt, wobei die Fahrzeugführung wieder durch den Fahrer erfolgt.

Wird im Schritt S11 ermittelt, dass die Rückschaltbedingung nicht erfüllt ist, so werden im Schritt S13 Ego- und Umfelddaten erfasst und erneut ein Umfeld- und Dynamikmodell berechnet und im Schritt S14 die Steuertrajektorie angepasst. Dabei entspricht Schritt S13 im Wesentlichen den Schritten S2. Die Anpassung der Steuertrajektorien Schritt S14 ist optional und erfolgt nur dann, wenn ermittelt wird, dass die bisherige Steuertrajektorie nicht mehr möglich oder nicht mehr optimal ist.

Wird im Schritt S6 ermittelt, dass im Schritt S5 unter den im Schritt S4 bestimmten Randbedingungen keine Trajektorie berechnet werden konnte, so wird im Schritt S15 eine Warnung an den Fahrer ausgeben. Die im Schritt S4 bestimmten Randbedingungen versuchen typischerweise Trajektorien zu berechnen, die innerhalb eines Komfortbereichs eines Fahrers oder zumindest innerhalb eines individuellen Grenzbereichs eines Fahrers liegen. Ist die Berechnung einer solchen Trajektorie nicht möglich, so bedeutet dies, dass der Fahrbetrieb des Kraftfahrzeugs nicht sicher fortgesetzt werden kann oder dass eine Fortsetzung des Fahrbetriebs nur entlang einer Trajektorie möglich ist, die zumindest jenseits des Komfortbereichs des Fahrers liegt.

Im Schritt S16 werden daraufhin die Randbedingungen angepasst. Die Anpassung der Randbedingungen erfolgt insbesondere durch ein Untergewichten der Fahrereigenschaftsdaten. Das Untergewichten der Fahrereigenschaftsdaten kann insbesondere dadurch realisiert werden, dass die Fahrereigenschaftsdaten bei der Bestimmung der Randbedingungen nicht mehr berücksichtigt werden, so dass sie nur noch bei der Bestimmung einiger der Randbedingungen berücksichtigt werden und/oder dass bei der Bestimmung einiger der Randbedingungen eine Randbedingung genutzt wird, die zwischen einem physikalischen Grenzbereich und einem Bereich, der durch die Fahrereigenschaftsdaten vorgegeben ist, liegt.

Im Schritt S17 werden mit den im Schritt S16 angepassten Randbedingungen erneut fahrbare Trajektorien berechnet. In dem in Fig. 4 gezeigten Verfahren wird in dem Fall, wenn eine Anpassung der Randbedingungen zum Finden wenigstens einer Trajektorie notwendig ist, stets in den zweiten Modus des Fahrerassistenzsystems gewechselt, das heißt es findet stets ein autonomer Fahrbetrieb statt. Daher ist es im Schritt S17 auch möglich, dass direkt eine Steuertrajektorie berechnet wird. Es ist jedoch auch möglich, dass in Schritt S17 mehrere fahrbare Trajektorien berechnet werden, aus denen in einem nicht gezeigten Schritt eine der Trajektorien als Steuertrajektorie ausgewählt wird.

Im Schritt S18 wird überprüft, ob es möglich war, im Schritt S17 zumindest eine Trajektorie zu berechnen. War eine solche Berechnung einer Trajektorie möglich, so ist eine sicher fahrbare Trajektorie für das Kraftfahrzeug bekannt und das Verfahren kann im Schritt S10 mit dem autonomen Fahrbetrieb im zweiten Betriebsmodus fortgesetzt werden.

Wurde im Schritt S18 ermittelt, dass trotz der Anpassung der Randbedingungen im Schritt S16 keine Trajektorie ermittelt werden kann, so erfolgt im Schritt S19 eine Ausnahmebehandlung. Im Rahmen dieser Ausnahmebehandlung ist es möglich, dass Randbedingungen erneut angepasst werden. So können, wenn im Schritt S4 Trajektorien in einem Komfortbereich eines Fahrers ermittelt werden und dort keine Trajektorie ermittelt werden kann, im Schritt S17 Trajektorien in einem individuellen Grenzbereich eines Fahrers ermittelt werden und falls selbst dort eine Ermittlung einer fahrbaren Trajektorie nicht möglich ist, im Schritt S19 Trajektorien in einem physikalischen Grenzbereich ermittelt werden. Insbesondere ist es jedoch möglich, eine Notfalltrajektorie zu ermitteln, die zu einem sicheren Abstellen des Kraftfahrzeugs bzw., falls dieses nicht möglich ist, zu einer Minimierung von Schäden an Personen, Drittgegenständen und dem eigenen Kraftfahrzeug führt. In der Regel endet das Verfahren nach der Ausnahmebehandlung im Schritt S19 im Schritt S20 mit einem stehenden Kraftfahrzeug.

## Patentansprüche

1. Kraftfahrzeug umfassend wenigstens ein Fahrerassistenzsystem (2) zur Vorausberechnung von Voraussagedaten über wenigstens eine zukünftige Fahrsituation des Kraftfahrzeugs (1) durch Auswertung von das Kraftfahrzeug (1) betreffenden Egodaten und das Kraftfahrzeugumfeld betreffenden Umfelddaten, wobei das Kraftfahrzeug (1) in einem ersten Betriebsmodus des Fahrerassistenzsystems (2) durch einen Fahrer steuerbar ist, wobei das Fahrerassistenzsystem (2) dazu ausgebildet ist, bei Erfüllung einer Auslösebedingung oder wenigstens einer Auslösebedingung von mehreren Auslösebedingungen temporär in einen zweiten Betriebsmodus umzuschalten, in dem die Steuerung des Kraftfahrzeugs (1) ohne Eingriffsmöglichkeit durch den Fahrer autonom durch das Fahrerassistenzsystem (2) erfolgt, wobei die Auslösebedingung dazu ausgebildet ist, zumindest die Voraussagedaten auszuwerten, wobei die Voraussagedaten Trajektoriedaten umfassen, die mehrere von der momentanen Position des Kraftfahrzeugs (1) ausgehende fahrbare Trajektorien beschreiben, wobei
das Fahrerassistenzsystem (2) zur Berechnung der Trajektoriendaten unter wenigstens einer aus Egodaten und/oder Umfelddaten bestimmten Randbedingung ausgebildet ist und die Auslösebedingung zur Auswertung der Trajektoriendaten ausgebildet ist
**dadurch gekennzeichnet,**
**dass** die Auslösebedingung zur Auswertung von wenigstens eine Fahrereigenschaft beschreibenden Fahrereigenschaftsdaten ausgebildet ist, wobei das Fahrerassistenzsystem (2) zur Bestimmung eines Grenzwerts für einen Fahrzeugparameter aus den Trajektoriendaten und den Fahrereigenschaftsdaten ausgebildet ist und die Auslösebedingung oder eine der Auslösebedingungen das Über- oder Unterschreiten des Grenzwerts ist.

2. Kraftfahrzeug nach Anspruch 1,
**dadurch gekennzeichnet,**
**dass** die Fahrereigenschaftsdaten eine insbesondere numerische Beschreibung der fahrerischen Fähigkeiten und/oder der Belastbarkeit und/oder des Fahrverhaltens des Fahrers sind.

3. Kraftfahrzeug nach Anspruch 1 oder 2,
**dadurch gekennzeichnet,**
**dass** das Kraftfahrzeug (1) ein Bedienelement (14) zur Eingabe der Fahrereigenschaftsdaten umfasst oder dass das Kraftfahrzeug (1) ein Bedienelement (14) zur Eingabe weiterer Fahrerdaten umfasst, wobei das Fahrerassistenzsystem (2) zur Bestimmung der Fahrereigenschaftsdaten unter Berücksichtigung der weiteren Fahrerdaten ausgebildet ist.

4. Kraftfahrzeug nach einem der vorangehenden Ansprüche,
**dadurch gekennzeichnet,**
**dass** das Fahrerassistenzsystem (2) zur Erfassung des Fahrverhaltens des Fahrers und zur Auswertung des Fahrverhaltens zur Bestimmung und/oder Anpassung der Fahrereigenschaftsdaten ausgebildet ist.

5. Kraftfahrzeug nach einem der vorangehenden Ansprüche,
**dadurch gekennzeichnet,**
**dass** es ein Fahrerzustandserfassungsmittel (17) zur Erfassung eines Fahrerzustandes umfasst, wobei das Fahrerassistenzsystem zur Anpassung der Fahrereigenschaftsdaten in Abhängigkeit des Fahrerzustandes ausgebildet ist.

6. Kraftfahrzeug nach einem der vorangehenden Ansprüche,
**dadurch gekennzeichnet,**
**dass** das Fahrerassistenzsystem (2) zum Umschalten vom zweiten in den ersten Betriebsmodus bei Vorliegen wenigstens einer Rückschaltbedingung ausgebildet ist, die von den Fahrereigenschaftsdaten abhängig ist.

7. Kraftfahrzeug nach einem der vorangehenden Ansprüche,
**dadurch gekennzeichnet,**
**dass** das Fahrerassistenzsystem (2) zur Bestimmung einer von der momentanen Position des Kraftfahrzeugs ausgehenden Steuertrajektorie (31) und zur Steuerung des Kraftfahrzeugs (1) entlang der Steuertrajektorie (31) im zweiten Betriebsmodus ausgebildet ist, wobei das Fahrerassistenzsystem (2) zur Bestimmung der Steuertrajektorie (31) in Abhängigkeit der Fahrereigenschaftsdaten ausgebildet ist.

8. Kraftfahrzeug nach einem der vorangehenden Ansprüche,
**dadurch gekennzeichnet,**
**dass** das Fahrerassistenzsystem (2) im zweiten Betriebsmodus zur autonomen Steuerung der Lenkung (8) und/oder der Bremssysteme (10) und/oder des Motors (11) und/oder des vorzugsweise automatischen Getriebes (12) des Kraftfahrzeugs (1) ohne Eingriffsmöglichkeit durch den Fahrer ausgebildet ist.

9. Kraftfahrzeug nach einem der vorangehenden Ansprüche,
**dadurch gekennzeichnet,**
**dass** das Fahrerassistenzsystem (2) zur Bestimmung der Randbedingung oder wenigstens einer der Randbedingungen in Abhängigkeit der Fahrereigenschaftsdaten ausgebildet ist.

10. Kraftfahrzeug nach einem der vorangehenden Ansprüche ,
**dadurch gekennzeichnet,**
**dass** das Fahrerassistenzsystem (2) dazu ausgebildet ist, wenigstens eine Randbedingung durch Untergewichten der Fahrereigenschaftsdaten anzupassen und die Trajektoriendaten neu zu berechnen, wenn keine fahrbare Trajektorie ermittelt werden kann.

11. Kraftfahrzeug nach einem der vorangehenden Ansprüche ,
**dadurch gekennzeichnet,**
**dass** eine der Auslösebedingungen ein Unterschreiten eines Minimalwerts für die Anzahl der durch die Trajektoriendaten beschriebenen fahrbaren Trajektorien oder einer minimalen Breite eines Wertebereichs wenigstens eines Parameters, der eine durch die Trajektoriendaten beschriebene Trajektorienschar parametrisiert, ist, wobei das Fahrassistenzsystem (2) zur Bestimmung des Minimalwerts oder der minimalen Breite in Abhängigkeit von den Fahrereigenschaftsdaten ausgebildet ist.

12. Verfahren zur Steuerung eines Kraftfahrzeugs, umfassend wenigstens ein Fahrerassistenzsystem, wobei das Kraftfahrzeug in einem ersten Betriebsmodus des Fahrerassistenzsystems durch einen Fahrer steuerbar ist, umfassend die Schritte:
- Ermitteln von eine Fahrereigenschaft beschreibenden Fahrereigenschaftsdaten durch das Fahrerassistenzsystem,
- Erfassen von das Kraftfahrzeug betreffenden Egodaten und das Kraftfahrzeugumfeld betreffenden Umfelddaten,
- Vorausberechnen von wenigstens eine zukünftige Fahrsituation des Kraftfahrzeugs beschreibenden Voraussagedaten durch Auswertung von das Kraftfahrzeug betreffenden Egodaten und das Kraftfahrzeugumfeld betreffenden Umfelddaten, wobei die Voraussagedaten Trajektoriendaten umfassen, die mehrere von der momentanen Position des Kraftfahrzeugs ausgehende fahrbare Trajektorien beschreiben und durch das Fahrerassistenzsystem unter wenigstens einer aus den Egodaten und/oder den Umfelddaten bestimmten Randbedingung berechnet werden,
- Überprüfen, ob eine Auslösebedingung oder wenigstens eine von mehreren Auslösebedingungen erfüllt ist, durch das Fahrerassistenzsystem, wobei die Auslösebedingung zumindest die die Trajektoriendaten umfassenden Voraussagedaten und die Fahrereigenschaftsdaten auswertet, wobei durch das Fahrerassistenzsystem (2) ein Grenzwert für einen Fahrzeugparameter aus den Trajektoriendaten und den Fahrereigenschaftsdaten bestimmt wird und die Auslösebedingung oder eine der Auslösebedingungen das Über- oder Unterschreiten des Grenzwerts ist,
- temporäres Umschalten in den zweiten Betriebsmodus des Fahrerassistenzsystems, falls die Auslösebedingung erfüllt ist, und
- autonomes Steuern des Kraftfahrzeugs ohne Eingriffsmöglichkeit des Fahrers durch das Fahrerassistenzsystem im zweiten Betriebsmodus.

13. Verfahren nach Anspruch 12,
**dadurch gekennzeichnet,**
**dass** eine der Auslösebedingungen ein Unterschreiten eines Minimalwerts für die Anzahl der durch die Trajektoriendaten beschriebenen fahrbaren Trajektorien oder einer minimalen Breite eines Wertebereichs wenigstens eines Parameters, der eine durch die Trajektoriendaten beschriebene Trajektorienschar parametrisiert, ist, wobei der Minimalwert oder die minimale Breite durch das Fahrassistenzsystem (2) in Abhängigkeit von den Fahrereigenschaftsdaten bestimmt wird,

## Claims

1. Motor vehicle comprising at least one driver assistance system (2) for forecasting forecast data about at least one future driving situation of the motor vehicle (1) by evaluating ego data relating to the motor vehicle (1) and ambient data relating to the motor vehicle surroundings, wherein in a first operating mode of the driver assistance system (2) the motor vehicle (1) is controllable by a driver, wherein the driver assistance system (2) is configured, when a trigger condition or at least one trigger condition of a plurality of trigger conditions is fulfilled, to switch over temporarily into a second operating mode, in which the control of the motor vehicle (1) is carried out autonomously by the driver assistance system (2) without the possibility of intervention on the part of the driver, wherein the trigger condition is configured to evaluate at least forecast data, wherein the forecast data comprise trajectory data which describe several driveable trajectories starting from the current position of the motor vehicle (1), wherein
the driver assistance system (2) is configured to calculate trajectory data under at least one limiting condition specified from ego data and/or ambient data and the trigger condition is configured to evaluate the trajectory data
**characterised in that**
the trigger condition is configured to evaluate driver characteristic data describing at least one driver characteristic, wherein the driver assistance system (2) is configured to specify a threshold value for a vehicle parameter from the trajectory data and the driver characteristic data and the trigger condition or one of the trigger conditions is the overshooting or undershooting of the threshold value.

2. Motor vehicle according to claim 1,
**characterised in that**
the driver characteristic data are an in particular numerical description of the driver's capabilities and/or the resilience and/or the driving behaviour of the driver.

3. Motor vehicle according to claim 1 or 2,
**characterised in that**
the motor vehicle (1) comprises an operating element (14) for inputting the characteristic data for that the motor vehicle (1) comprises an operating element (14) for inputting further driver data, wherein the driver assistance system (2) is configured for specifying the driver characteristic data taking into consideration the further driver data.

4. Motor vehicle according to any of the preceding claims,
**characterised in that**
the driver assistance system (2) is configured for detecting the driving behaviour of the driver and for evaluating the driving behaviour for specifying and/or adapting the driver characteristic data.

5. Motor vehicle according to any of the preceding claims,
**characterised in that**
it comprises a driver condition detecting means (17) for detecting a driver condition, wherein the driver assistance system is configured to adapt the driver characteristic data as a function of the driver condition.

6. Motor vehicle according to any of the preceding claims,
**characterised in that**
the driver assistance system (2) configured to switch from the second into the first operating mode if at least one switch back condition is present which is dependent on the driver characteristic data.

7. Motor vehicle according to any of the preceding claims,
**characterised in that**
the driver assistance system (2) is configured to specify a control trajectory (31) starting from the current position of the motor vehicle and for controlling the motor vehicle (1) along the control trajectory (31) in the second operating mode, wherein the driver assistance (2) is configured to specify the control trajectory (31) as a function of the driver characteristic data.

8. Motor vehicle according to any of the preceding claims,
**characterised in that**
the driver assistance system (2) is configured in the second operating mode for the autonomous control of the steering (8) and/or the brake systems (10) and/or the motor (11) and/or the preferably automatic transmission (12) of the motor vehicle (1) without the possibility of intervention on the part of the driver.

9. Motor vehicle according to any of the preceding claims,
**characterised in that**
the driver assistance system (2) is configured to specify the limiting condition or at least one of the limiting conditions as a function of the driver characteristic data.

10. Motor vehicle according to any of the preceding claims,
**characterised in that**
the driver assistance system (2) is configured to adapt at least one limiting condition by underweighting the driver characteristic data and to calculate the trajectory data anew when no driveable trajectory can be determined.

11. Motor vehicle according to any of the preceding claims,
**characterised in that**
one of the trigger conditions is an undershooting of a minimum value for the number of the driveable trajectories described by the trajectory data or of a minimum width of a value range of at least one parameter which parameterises a trajectory chart described by the trajectory data, wherein the driver assistance system (2) is configured for specifying the minimum value or the minimum width as a function of the driver characteristic data.

12. Method for controlling a motor vehicle, comprising at least one driver assistance system, wherein in a first operating mode of the driver assistance system the motor vehicle is controllable by a driver, comprising the steps:
- determining driver characteristic data describing a driver characteristic using the driver assistance system,
- detecting ego data relating to the motor vehicle and ambient data relating to the motor vehicle surroundings,
- forecasting forecast data describing at least one future driving situation of the motor vehicle by evaluating ego data relating to the motor vehicle and ambient data relating to the motor vehicle surroundings, wherein the forecast data comprise trajectory data which describe several driveable trajectories starting from the current position of the motor vehicle and are calculated by the driver assistance system under at least one limiting condition specified from the ego data and/or the ambient data,
- verifying, using the driver assistance system, whether a trigger condition or at least one or several trigger conditions is fulfilled, wherein the trigger condition evaluates at least the forecast data comprising the trajectory data, and the driver characteristic data, wherein by means of the driver assistance system (2) a threshold value for a vehicle parameter is specified from the trajectory data and the driver characteristic data, and the trigger condition for one of the trigger conditions is the overshooting or undershooting of the threshold value,
- temporary switching into the second operating mode of the driver assistance system in the case that the trigger condition is fulfilled, and
- autonomous controlling of the motor vehicle, without the possibility of intervention on the part of the driver, on the part of the driver assistance system in the second operating mode.

13. Method according to claim 12,
**characterised in that**
one of the trigger conditions is an undershooting of a minimum value for the number of the driveable trajectories described by the trajectory data or of a minimum width of a value range of at least one parameter which parameterises a trajectory chart described by the trajectory data, wherein the minimum value or the minimum width is specified by the driver assistance system (2) as a function of the driver characteristic data.

## Revendications

1. Véhicule automobile comprenant au moins un système d'assistance au conducteur (2) pour précalculer des données de prédiction à propos d'au moins une situation de conduite future du véhicule automobile (1) en évaluant des données ego relatives au véhicule automobile (1) et des données d'environnement relatives à l'environnement de véhicule automobile, dans lequel le véhicule automobile (1) peut être commandé par un conducteur dans un premier mode de fonctionnement du système d'assistance au conducteur (2), dans lequel le système d'assistance au conducteur (2) est conçu pour, lorsqu'une condition de déclenchement ou au moins une condition de déclenchement parmi plusieurs conditions de déclenchement est remplie, passer temporairement à un second mode de fonctionnement dans lequel la commande du véhicule automobile (1) est effectuée de manière autonome par le système d'assistance au conducteur (2) sans possibilité d'intervention par le conducteur, dans lequel la condition de déclenchement est conçue pour évaluer au moins les données de prédiction, dans lequel les données de prédiction comprennent des données de trajectoire qui décrivent plusieurs trajectoires mobiles émanant de la position momentanée du véhicule automobile (1), dans lequel
le système d'assistance au conducteur (2) est conçu pour calculer les données de trajectoire sous au moins une contrainte déterminée à partir de données ego et/ou de données d'environnement et la condition de déclenchement est conçue pour évaluer les données de trajectoire.
**caractérisé en ce que**
la condition de déclenchement est conçue pour évaluer des données de caractéristique de conducteur décrivant au moins une caractéristique de conducteur, dans lequel le système d'assistance au conducteur (2) est conçu pour déterminer une valeur limite pour un paramètre de véhicule à partir des données de trajectoire et des données de caractéristique de conducteur, et la condition de déclenchement ou une des conditions de déclenchement est le dépassement ou sous-dépassement de la valeur limite.

2. Véhicule automobile selon la revendication 1,
**caractérisé en ce que**
les données de caractéristique de conducteur sont une description, en particulier numérique, des capacités de conducteur et/ou de la capacité de charge et/ou du comportement de conduite du conducteur.

3. Véhicule automobile selon la revendication 1 ou 2,
**caractérisé en ce que**
le véhicule automobile (1) comprend un élément de réglage (14) pour entrer les données de caractéristique de conducteur ou **en ce que** le véhicule automobile (1) comprend un élément de réglage (14) pour entrer des données de conducteur supplémentaires, dans lequel le système d'assistance au conducteur (2) est conçu pour déterminer les données de caractéristique de conducteur en tenant compte des données de conducteur supplémentaires.

4. Véhicule automobile selon l'une quelconque des revendications précédentes,
**caractérisé en ce que**
le système d'assistance au conducteur (2) est conçu pour détecter le comportement de conduite du conducteur et pour évaluer le comportement de conduite afin de déterminer et/ou adapter les données de caractéristique de conducteur.

5. Véhicule automobile selon l'une quelconque des revendications précédentes,
**caractérisé en ce que**
il comprend un moyen de détection d'état de conducteur (17) pour détecter un état de conducteur, dans lequel le système d'assistance au conducteur est conçu pour adapter les données de caractéristique de conducteur en fonction de l'état de conducteur.

6. Véhicule automobile selon l'une quelconque des revendications précédentes,
**caractérisé en ce que**
le système d'assistance au conducteur (2) est conçu pour passer du second au premier mode de fonctionnement en présence d'au moins une condition de rétrogradation qui dépend des données de caractéristique de conducteur.

7. Véhicule automobile selon l'une quelconque des revendications précédentes,
**caractérisé en ce que**
le système d'assistance au conducteur (2) est conçu pour déterminer une trajectoire de commande (31) émanant de la position momentanée du véhicule automobile et pour commander le véhicule automobile (1) le long de la trajectoire de commande (31) dans le second mode de fonctionnement, dans lequel le système d'assistance au conducteur (2) est conçu pour déterminer la trajectoire de commande (31) en fonction des données de caractéristique de conducteur.

8. Véhicule automobile selon l'une quelconque des revendications précédentes,
**caractérisé en ce que**
le système d'assistance au conducteur (2) est conçu, dans le second mode de fonctionnement, pour la commande autonome de la direction (8) et/ou des systèmes de freinage (10) et/ou du moteur (11) et/ou de la boîte de vitesses (12), de préférence automatique, du véhicule automobile (1) sans possibilité d'intervention du conducteur.

9. Véhicule automobile selon l'une quelconque des revendications précédentes,
**caractérisé en ce que**
le système d'assistance au conducteur (2) est conçu pour déterminer la contrainte ou au moins une des contraintes en fonction des données de caractéristique de conducteur.

10. Véhicule automobile selon l'une quelconque des revendications précédentes,
**caractérisé en ce que**
le système d'assistance au conducteur (2) est conçu pour adapter au moins une contrainte en sous-pondérant les données de caractéristique de conducteur et pour recalculer les données de trajectoire lorsque aucune trajectoire pouvant être parcourue ne peut être déterminée.

11. Véhicule automobile selon l'une quelconque des revendications précédentes,
**caractérisé en ce que**
une des conditions de déclenchement est un sous-dépassement d'une valeur minimale pour le nombre de trajectoires pouvant être parcourues décrites par les données de trajectoire ou d'une largeur minimale d'une plage de valeurs d'au moins un paramètre qui paramètre un groupe de trajectoires décrites par les données de trajectoire, dans lequel le système d'assistance au conducteur (2) est conçu pour déterminer la valeur minimale ou la largeur minimale en fonction des données de caractéristique de conducteur.

12. Procédé de commande d'un véhicule automobile, comprenant au moins un système d'assistance au conducteur, dans lequel le véhicule automobile peut être commandé par un conducteur dans un premier mode de fonctionnement du système d'assistance au conducteur, comprenant les étapes consistant à :
- déterminer par le système d'assistance au conducteur des données de caractéristique de conducteur décrivant une caractéristique de conducteur,
- détecter des données d'ego concernant le véhicule automobile et des données d'environnement concernant l'environnement de véhicule automobile,
- précalculer des données de prédiction décrivant au moins une situation de conduite future du véhicule automobile par évaluation de données ego concernant le véhicule automobile et de données d'environnement concernant l'environnement de véhicule automobile, dans lequel les données de prédiction comprennent des données de trajectoire qui décrivent plusieurs trajectoires pouvant être parcourues émanant de la position momentanée du véhicule automobile et qui sont calculées par le système d'assistance au conducteur sous au moins une contrainte déterminée à partir des données ego et/ou des données d'environnement,
- vérifier si une condition de déclenchement ou au moins une parmi plusieurs conditions de déclenchement est remplie par le système d'assistance au conducteur, dans lequel la condition de déclenchement évalue au moins les données de prédiction comprenant les données de trajectoire et les données de caractéristique de conducteur, dans lequel une valeur limite pour un paramètre de véhicule est déterminée par le système d'assistance au conducteur (2) à partir des données de trajectoire et des données de caractéristique de conducteur, et la condition de déclenchement ou une des conditions de déclenchement est le dépassement ou sous-dépassement de la valeur limite,
- temporairement passer au second mode de fonctionnement du système d'assistance au conducteur si la condition de déclenchement est remplie, et
- commander de manière autonome le véhicule automobile sans possibilité d'intervention du conducteur par le système d'assistance au conducteur dans le second mode de fonctionnement.

13. Procédé selon la revendication 12,
**caractérisé en ce que**
une des conditions de déclenchement est un sous-dépassement d'une valeur minimale pour le nombre de trajectoires pouvant être parcourues décrites par les données de trajectoire ou d'une largeur minimale d'une plage de valeurs d'au moins un paramètre qui paramètre un groupe de trajectoires décrites par les données de trajectoire, dans lequel la valeur minimale ou la largeur minimale est déterminée par le système d'assistance au conducteur (2) en fonction des données de caractéristique de conducteur,
